(19) Europäisches Patentamt
European Patent Office
Office européen des brevets

(11) **EP 3 584 750 A1**

(12) **EUROPEAN PATENT APPLICATION**
published in accordance with Art. 153(4) EPC

(43) Date of publication:
**25.12.2019 Bulletin 2019/52**

(51) Int Cl.:
***G06N 99/00*** (2019.01)

(21) Application number: **17896366.6**

(22) Date of filing: **09.11.2017**

(86) International application number:
**PCT/JP2017/040356**

(87) International publication number:
**WO 2018/150654 (23.08.2018 Gazette 2018/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.02.2017 JP 2017026205**

(71) Applicant: **Sony Corporation Tokyo 108-0075 (JP)**

(72) Inventors:
• **NAKAHASHI, Ryo**
  **Tokyo 108-0075 (JP)**
• **SUZUKI, Hirotaka**
  **Tokyo 108-0075 (JP)**
• **NARIHIRA, Takuya**
  **Tokyo 108-0075 (JP)**
• **NODA, Atsushi**
  **Tokyo 108-0075 (JP)**

(74) Representative: **MFG Patentanwälte Meyer-Wildhagen Meggle-Freund Gerhard PartG mbB Amalienstraße 62 80799 München (DE)**

(54) **INFORMATION PROCESSING DEVICE, INFORMATION PROCESSING METHOD, AND PROGRAM**

(57)     Provided are an apparatus and a method enabling efficient reinforcement learning to be performed by input of an annotation. Included are a database configured to store respective pieces of information of a state, an action, and a reward of a processing execution unit, a learning execution unit configured to execute learning processing in accordance with a reinforcement learning algorithm to which the information stored in the database is applied, and an annotation input unit configured to input annotation information including sub reward setting information and store the annotation information in the database. The learning execution unit executes learning processing to which the respective pieces of information of the state, the action, and the reward input from the processing execution unit and the sub reward setting information are applied. The learning execution unit derives an action determination rule for estimating an action to be executed to raise an expected reward and determines an action which the processing execution unit is caused to execute in accordance with the action determination rule.

FIG. 13

**Description**

TECHNICAL FIELD

The present disclosure relates to an information processing apparatus, and an information processing method, and a program. The present disclosure specifically relates to an information processing apparatus, and an information processing method, and a program achieving efficient data processing by means of machine learning.

BACKGROUND ART

In recent years, in various information processing fields is used an autonomous information processing apparatus autonomously performing behavior control and data processing control through a machine learning without the need for person's determination and operation, such as an information processing apparatus called a robot or an agent.

Meanwhile, as processing for causing the information processing apparatus such as a robot or an agent to perform optimal data processing and autonomous control, machine learning is known.

There are various methods for the machine learning.

Specific examples are a plurality of different algorithms such as supervised learning, unsupervised learning, and reinforcement learning.

The supervised learning is a learning method in which a label (training data) including a question-and-correct-answer set is prepared, and in which learning based on this label is performed to cause processing for deriving the correct answer from the question to be learned.

The unsupervised learning is a learning method in which no correct answer data is prepared for a question, in which a behavior that an information processing apparatus such as an agent (robot) has executed and a result of data processing are examined, in which clustering is performed as classification processing for determining whether the result is correct or incorrect, and in which correct processing is sequentially confirmed to cause processing for deriving the correct answer from the question to be learned.

Furthermore, the reinforcement learning is a learning method with use of three elements including a state, an action, and a reward in which processing for, when an information processing apparatus such as an agent (robot) performs a certain action in a certain state, giving a reward in a case where the action is correct is repeated to cause an optimal action for each of various states, that is, a correct action, to be learned.

This reinforcement learning algorithm has a problem in which learning efficiency is lowered depending on how the reward is set.

One typical example of setting a reward is setting in which one reward is given when, from a processing start state (start), a processing end state (goal) in which a final goal is completed is reached.

However, during a period from the processing start state to the processing end state, there are various branch points. For example, in many cases, each of the branch points is in a state in which a plurality of actions is selectable. The agent (robot) can perform different actions at each of the branch points, and in a case where the agent (robot) repeats incorrect actions, it consequently takes significant time for the agent (robot) to reach the final goal. That is, a problem in which learning efficiency is lowered occurs.

As one method for solving such a problem in the reinforcement learning, there is a method described in Non-Patent Document 1 (Hierarchical Deep Reinforcement Learning: Integrating Temporal Abstraction and Intrinsic Motivation).

Non-Patent Document 1 discloses a reinforcement learning processing configuration with use of a learning program in which a sub-goal is set in advance as a point at which a reward is given in the middle of a path from a processing start state (start) to a processing end state (goal) in which a final goal is completed.

The information processing apparatus such as an agent (robot) is caused to execute learning processing in accordance with the sub-goal-setting-type reinforcement learning program. The information processing apparatus such as an agent (robot) can proceed with learning while confirming correct actions at a plurality of points in the middle of the path from start to end, which results in shortening of time until the apparatus reaches the final goal.

However, such a sub-goal-setting learning program can be prepared only by a programmer having a programming skill and a skill for preparing a learning program, not by general users such as ordinary people having insufficient knowledge of programming.

CITATION LIST

NON-PATENT DOCUMENT

Non-Patent Document 1: Tejas D. Kulkarni, and three other persons, Hierarchical Deep Reinforcement Learning:

Integrating Temporal Abstraction and Intrinsic Motivation, [online], 30th Conference on Neural Information Processing System (NIPS 2016), Barcelona, Spain, the Internet [searched on January 27, 2017] (https://papers.nips.cc/paper/6233-hierarchical-deep-reinforcement-learning-integrating-temporal-abstraction-and-intrinsic-motivation)

## SUMMARY OF THE INVENTION

## PROBLEMS TO BE SOLVED BY THE INVENTION

The present disclosure is accomplished by taking such problems as mentioned above into consideration thereof, for example, and an object thereof is to provide an information processing apparatus, and an information processing method, and a program enabling even a general user having no special programming skill to execute efficient reinforcement learning.

## SOLUTIONS TO PROBLEMS

According to a first aspect of the present disclosure, there is provided an information processing apparatus including:

> a database configured to store respective pieces of information of a state, an action, and a reward regarding processing executed by a processing execution unit;
> a learning execution unit configured to execute learning processing in accordance with a reinforcement learning algorithm to which the respective pieces of information of the state, the action, and the reward stored in the database are applied; and
> an annotation input unit configured to input annotation information including sub reward setting information and store the annotation information in the database.
> The learning execution unit executes learning processing to which the respective pieces of information of the state, the action, and the reward input from the processing execution unit and the sub reward setting information input via the annotation input unit are applied.

Moreover, according to a second aspect of the present disclosure, there is provided an information processing method executed in an information processing apparatus, the information processing apparatus including:

> a database configured to store respective pieces of information of a state, an action, and a reward regarding processing executed by a processing execution unit;
> a learning execution unit configured to execute learning processing in accordance with a reinforcement learning algorithm to which the respective pieces of information of the state, the action, and the reward stored in the database are applied; and
> an annotation input unit configured to input annotation information including sub reward setting information and store the annotation information in the database.
> The learning execution unit executes learning processing to which the respective pieces of information of the state, the action, and the reward input from the processing execution unit and the sub reward setting information input via the annotation input unit are applied.

Moreover, according to a third aspect of the present disclosure, there is provided a program causing information processing to be executed in an information processing apparatus, the information processing apparatus including:

> a database configured to store respective pieces of information of a state, an action, and a reward regarding processing executed by a processing execution unit;
> a learning execution unit configured to execute learning processing in accordance with a reinforcement learning algorithm to which the respective pieces of information of the state, the action, and the reward stored in the database are applied; and
> an annotation input unit configured to input annotation information including sub reward setting information and store the annotation information in the database.

The program causes the learning execution unit to execute learning processing to which the respective pieces of information of the state, the action, and the reward input from the processing execution unit and the sub reward setting information input via the annotation input unit are applied.
Note that the program according to the present disclosure is a program that can be provided via a storage medium or a communication medium providing various kinds of program code in a computer-readable form to an information processing apparatus or a computer system that can execute the various kinds of program code, for example. By providing such a program in the computer-readable form, processing corresponding to the program is performed on the information processing apparatus or the computer system.

Other objects, characteristics, and advantages of the present disclosure become obvious by below-mentioned detailed description based on a below-mentioned embodiment of the present disclosure and attached drawings. Note that a system in the present description means a logically-collected configuration of a plurality of apparatuses and is not limited to one in which respective component apparatuses are in a single casing.

EFFECTS OF THE INVENTION

With a configuration of an embodiment of the present disclosure, an apparatus and a method enabling efficient reinforcement learning to be performed by input of an annotation are achieved.

Specifically, for example, the configuration includes a database configured to store respective pieces of information of a state, an action, and a reward of a processing execution unit, a learning execution unit configured to execute learning processing in accordance with a reinforcement learning algorithm to which the information stored in the database is applied, and an annotation input unit configured to input annotation information including sub reward setting information and store the annotation information in the database. The learning execution unit executes learning processing to which the respective pieces of information of the state, the action, and the reward input from the processing execution unit and the sub reward setting information are applied. The learning execution unit derives an action determination rule for estimating an action to be executed to raise an expected reward and determines an action which the processing execution unit is caused to execute in accordance with the action determination rule.

By the processing, an apparatus and a method enabling efficient reinforcement learning to be performed by input of an annotation are achieved.

Note that effects described in the present description are illustrative only and shall not be limited, and that additional effects may exist.

BRIEF DESCRIPTION OF DRAWINGS

Fig. 1 illustrates an algorithm of reinforcement learning.
Fig. 2 illustrates an example in which efficiency of cleaning executed by a cleaning robot is improved by learning processing.
Fig. 3 illustrates an example of a case where an agent (information processing apparatus) performing the learning processing is a PC executing games such as Go and Shogi.
Fig. 4 illustrates an example of a case where the agent (information processing apparatus) performing the learning processing is the PC executing a game.
Fig. 5 illustrates specific configuration examples and processing examples of a learning execution unit and a processing execution unit illustrated in Fig. 1.
Fig. 6 illustrates an example of an information processing apparatus including a learning execution apparatus and a processing execution apparatus.
Fig. 7 illustrates an example of an information processing apparatus including the learning execution apparatus and the processing execution apparatus.
Fig. 8 illustrates a typical example of setting a reward, in which one reward is given when, from a processing start state (start), a processing end state (goal) in which a final goal is completed is reached.
Fig. 9 illustrates a typical example of setting a reward, in which one reward is given when, from the processing start state (start), the processing end state (goal) in which the final goal is completed is reached.
Fig. 10 illustrates an example of learning processing with use of an annotation (sub reward setting information).
Fig. 11 illustrates an example of learning processing with use of the annotation (sub reward setting information).
Fig. 12 illustrates a configuration example of apparatuses performing learning processing with use of the annotation (sub reward setting information).
Fig. 13 illustrates a configuration example of apparatuses performing learning processing with use of the annotation (sub reward setting information).
Fig. 14 illustrates a configuration example of apparatuses performing learning processing with use of the annotation (sub reward setting information).
Fig. 15 illustrates a configuration example of apparatuses performing learning processing with use of the annotation (sub reward setting information).

Fig. 16 illustrates a configuration example and a processing example of apparatuses performing learning processing with use of the annotation (sub reward setting information).

Fig. 17 illustrates a configuration example of apparatuses performing learning processing with use of the annotation (sub reward setting information).

Fig. 18 illustrates an example of specific data included in the annotation (sub reward setting information).

Fig. 19 illustrates a flowchart describing a processing sequence executed by the information processing apparatus.

Fig. 20 illustrates a flowchart describing a processing sequence executed by the information processing apparatus.

Fig. 21 illustrates a hardware configuration example of the information processing apparatus.

MODE FOR CARRYING OUT THE INVENTION

Hereinbelow, an information processing apparatus, and an information processing method, and a program according to the present disclosure will be described in detail with reference to the drawings. Note that description is provided according to the following sections.

1. About Overview of Reinforcement Learning Processing
2. About Embodiment of Achieving Efficient Learning Processing
3. About Sequence of Processing Executed by Information Processing Apparatus
4. About Hardware Configuration Example of Information Processing Apparatus
5. Wrap-up of Configuration According to Present Disclosure

[1. About Overview of Reinforcement Learning Processing]

First, an overview of reinforcement learning processing will be described.

As described above, reinforcement learning is one of methods for machine learning.

The machine learning can broadly be classified into algorithms such as supervised learning, unsupervised learning, and reinforcement learning.

The supervised learning is a learning method in which a label (training data) including a question-and-correct-answer set is prepared, and in which learning based on this label is performed to cause processing for deriving the correct answer from the question to be learned.

The unsupervised learning is a learning method in which no correct answer data is prepared for a question, in which a behavior that an information processing apparatus such as an agent (robot) has performed and a result of data processing are examined, in which clustering is performed as classification processing for determining whether the result is correct or incorrect, and in which correct processing is sequentially confirmed to cause processing for deriving the correct answer from the question to be learned.

On the other hand, the reinforcement learning is a learning processing method with use of three elements including a state, an action, and a reward.

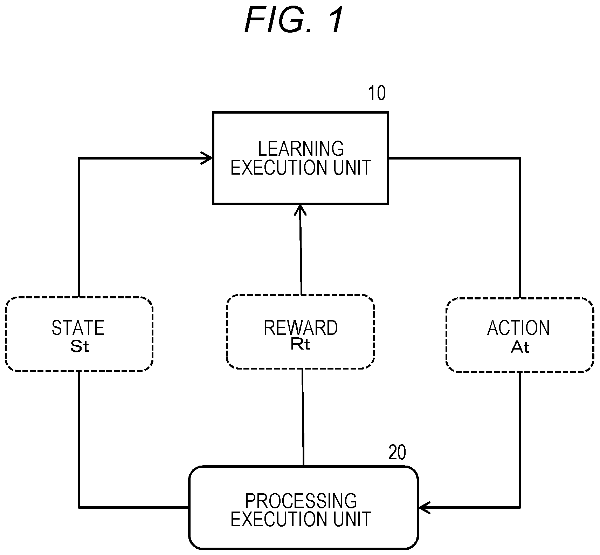

The algorithm of the reinforcement learning will be described with reference to Fig. 1.

Fig. 1 illustrates an information processing system including a learning execution unit 10 and a processing execution unit 20.

Note that the learning execution unit 10 and the processing execution unit 20 illustrated in Fig. 1 can be included in one information processing apparatus or can be set as respectively different units.

The learning execution unit 10 executes learning about processing to be executed in the processing execution unit 20. In a case where the learning is progressed in a favorable manner, the processing execution unit 20 can execute optimal processing autonomously.

The learning execution unit 10 illustrated in Fig. 1 receives state information (St) as observation information from the processing execution unit 20. In Fig. 1, t indicates time, and state information at time t is expressed as At.

The learning execution unit 10 determines an action (At) to be executed by the processing execution unit 20 in accordance with the input state information (St).

The processing execution unit 20 executes the action (At) that the learning execution unit 10 has determined to cause the state to change, and new state information (St) is input into the learning execution unit 10. However, no state change occurs in some cases. In this case, state information (St) is the same as previous information.

For example, a reward (Rt) in response to a state (St) generated as a result of an action (At) that the processing execution unit 20 has executed is input into the learning execution unit 10.

Specifically, for example, in a case where a game program is being executed in the processing execution unit 20, a score at the time of completion of the game is input into the learning execution unit 10 as a reward (Rt).

Alternatively, a difference from a score in a previous state is input into the learning execution unit 10 as a reward (Rt).

The learning execution unit 10 can recognize due to input of the reward (Rt) that the action (At) is correct.

However, in a case where the action (At) that the processing execution unit 20 has executed is not a correct action, no reward (Rt) is input into the learning execution unit 10.

Note that a configuration in which a reward (Rt) is input is not limited to the above configuration in which whether or not a reward is input is determined merely by whether an action (At) is correct or incorrect.

An example thereof is a configuration in which a reward (Rt) determined depending on an evaluation result for favorability of an action (At) is input.

In this manner, the reinforcement learning is a learning processing method with use of three elements including a state, an action, and a reward in which processing for, when an information processing apparatus such as an agent (robot) performs a certain action in a certain state, giving a reward in a case where the action is correct or favorable is repeated to cause an optimal action for each of various states, that is, a correct action, to be learned.

The learning execution unit 10 and the processing execution unit 20 are achieved by various apparatuses such as a robot performing a certain operation, a PC executing certain data processing or a certain game, and a cleaning robot.

In any of the above examples, the efficiency of certain specific processing such as a game and cleaning is improved by learning. Processing targeted for the learning processing differs depending on the kind of the apparatus.

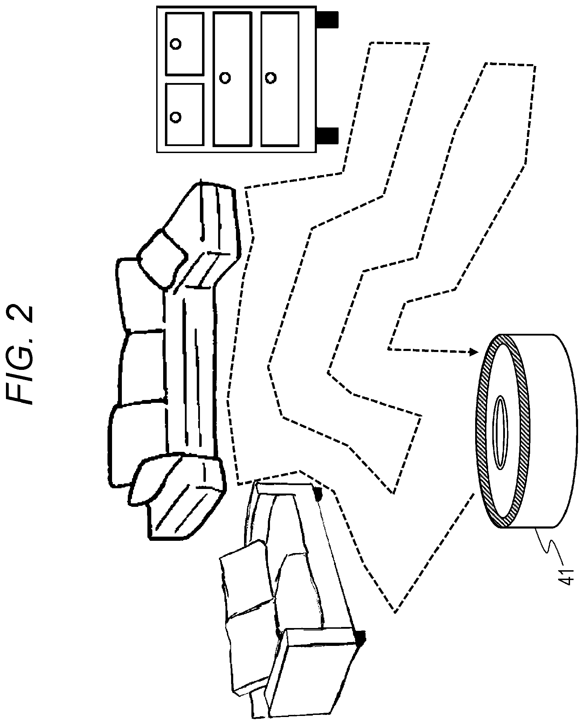

Specific examples of the agent (information processing apparatus) that can execute the reinforcement learning will be described with reference to Fig. 2 and the subsequent figures.

Fig. 2 illustrates an example in which the efficiency of cleaning, which is processing executed by a cleaning robot 41, is improved by learning processing.

For example, the cleaning robot 41 cleans a room in which various pieces of furniture are arranged. Processing that the cleaning robot 41 is required to perform is processing of running on the entire floor except parts provided with furniture to complete cleaning, and the cleaning robot 41 is required to perform this processing efficiently, that is, in a short period.

To satisfy this requirement, the cleaning robot 41 serving as an agent can memorize an optimal running route for cleaning by means of the learning processing.

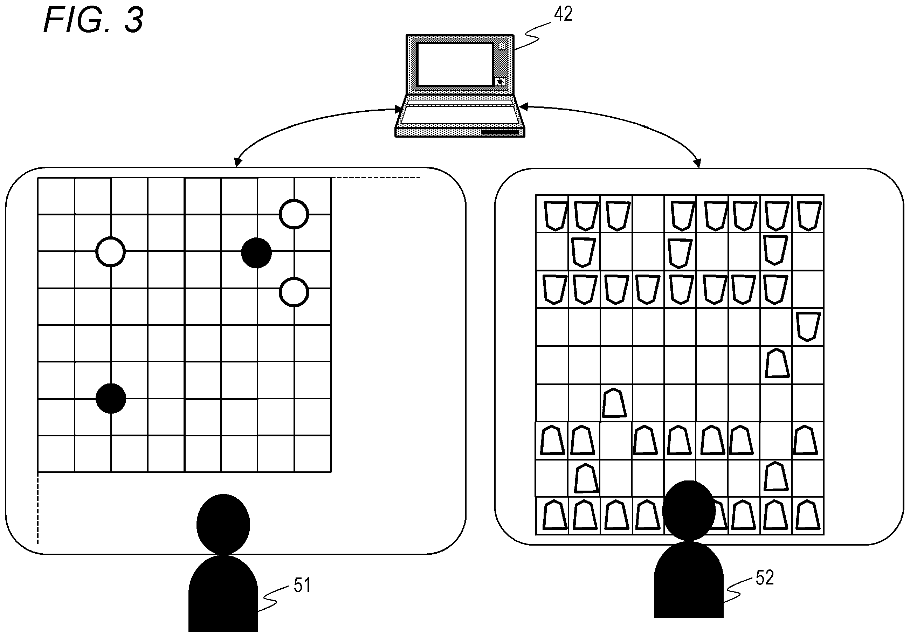

Fig. 3 illustrates an example of a case where the agent (information processing apparatus) performing the learning processing is a PC 42 executing games such as Go and Shogi.

As illustrated in the figure, the PC 42 plays Go and Shogi against opponents 51 and 52 who are real persons, for example.

The PC 42 plays the games in accordance with processing execution programs that follow rules of Go and Shogi.

Due to this program, the PC 42 can memorize the best moves to win the games of Go and Shogi by means of the learning processing.

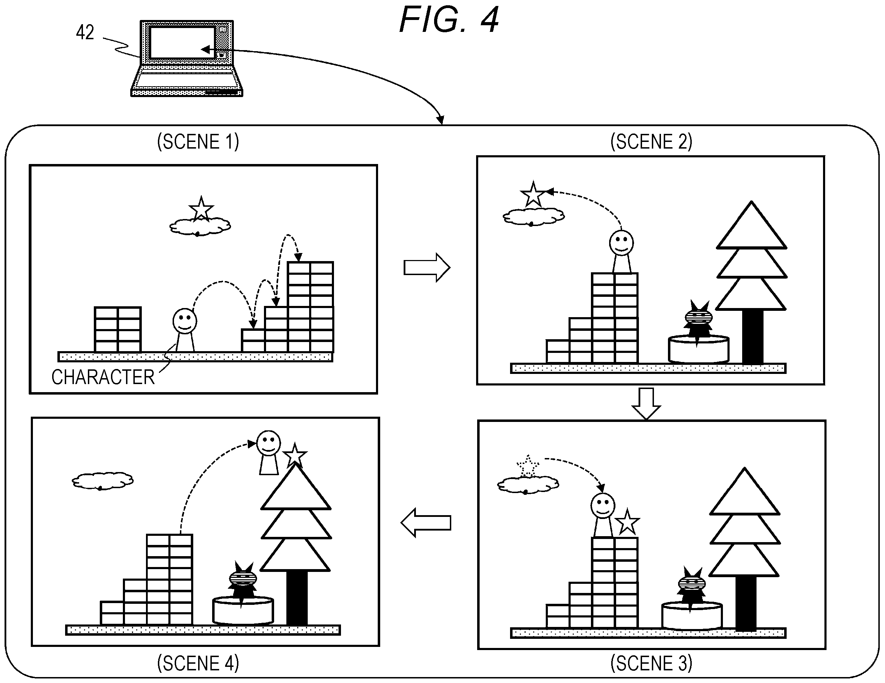

Fig. 4 illustrates an example of a case where the agent (information processing apparatus) performing the learning processing is the PC 42 executing a game.

As illustrated in the figure, the PC 42 executes a game displayed on a display unit.

The game proceeds from Scene 1 to Scene 4 as illustrated in the figure, for example.

In the game, on Scene 1, the character goes up the right stairs.

On Scene 2, the character gets on the upper-left cloud.

On Scene 3, the character takes the star on the cloud and returns to the stair.

On Scene 4, the character puts the star on the tree.

The game includes these scenes.

On Scene 4, in a case where the character succeeds in putting the star on the tree, a high score can be obtained.

This score corresponds to the reward in the reinforcement learning, and by performing learning to raise the score (reward), processing on Scenes 1 to 4 can be performed at higher speed.

As described with reference to Figs. 2 to 4, as the agent (information processing apparatus) in which processing can be improved in terms of efficiency and speed by the learning processing, various apparatuses such as robots performing various operations, PCs executing various kinds of data processing or games, and a cleaning robot are assumed.

The agent (information processing apparatus) learns processing to be executed to achieve a certain goal by means of the learning processing to eventually enable optimal processing to be performed.

The goal given to the agent (information processing apparatus) differs depending on the agent.

For example, a goal for the cleaning robot is short-period and efficient completion of cleaning, a goal for the game of Go or Shogi is winning, and a goal for the game is obtainment of a high score or the like.

As described above, the learning processing by means of the reinforcement learning algorithm has a problem of how the reward-giving points are set.

One typical example of setting a reward is setting in which one reward is given when a processing end state (goal) in which a goal is achieved is reached.

However, as described above, during a period from the processing start state to the processing end state, there are various branch points. For example, in many cases, each of the branch points is in a state in which a plurality of actions is selectable. The agent (robot) can perform different actions at each of the branch points, and in a case where the agent (robot) repeats incorrect actions, this causes a problem in which it consequently takes significant time for the agent (robot) to reach the final goal.

As described above, Non-Patent Document 1 (Hierarchical Deep Reinforcement Learning: Integrating Temporal Abstraction and Intrinsic Motivation) discloses a reinforcement learning processing configuration with use of a learning program in which a sub-goal is set in advance as a point at which a reward is given in the middle of a path from the processing start state (start) to the processing end state (goal) in which a final goal is completed.

The information processing apparatus such as an agent and a robot is caused to execute learning processing in accordance with the sub-goal-setting-type reinforcement learning program. The information processing apparatus such as an agent and a robot can proceed with learning while confirming correct actions at a plurality of points in the middle of the path from start to end, which results in shortening of time until the apparatus reaches the final goal.

However, such a sub-goal-setting learning program can be prepared only by few programmers having a programming skill and a skill for preparing a learning program, not by general users such as so-called ordinary people.

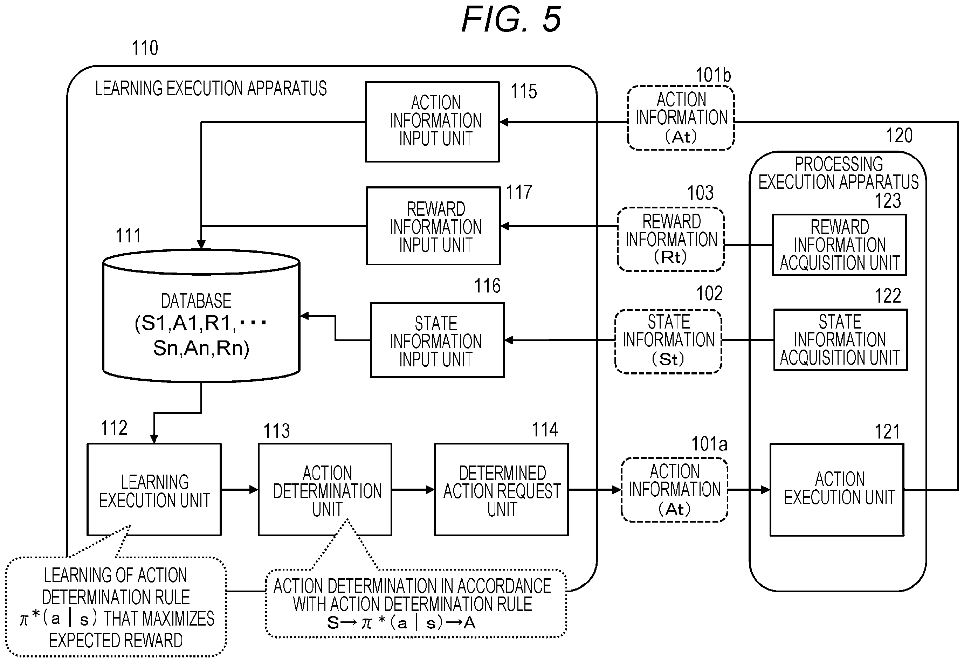

Next, referring to Fig. 5, specific configuration examples and processing examples of the learning execution unit 10 and the processing execution unit 20 described above with reference to Fig. 1 will be described.

Note that, in Fig. 5, the learning execution unit 10 described with reference to Fig. 1 is illustrated as a learning execution apparatus 110, and the processing execution unit 20 described with reference to Fig. 1 is illustrated as a processing execution apparatus 120.

Note that these two apparatuses can be set as one information processing apparatus or can be set as individual apparatuses.

The learning execution apparatus 110 illustrated in Fig. 5 is an apparatus executing the above-mentioned reinforcement learning processing.

Also, the processing execution apparatus 120 is an apparatus executing specific processing. For example, in a case of a cleaning robot, the processing execution apparatus 120 is an apparatus running by itself and performing cleaning. In another example, the processing execution apparatus 120 is an apparatus executing a game program and performing a game or the like.

The learning execution apparatus 110 illustrated in Fig. 5 includes a database 111, a learning execution unit 112, an action determination unit 113, a determined action request unit 114, an action information input unit 115, a state information input unit 116, and a reward information input unit 117.

The learning execution unit 112 in the learning execution apparatus 110 performs learning processing in accordance with the above-mentioned learning algorithm of the reinforcement learning.

Specifically, with use of, for example, time-series data of states (S), actions (A), and rewards (R) stored in the database 111, the learning execution unit 112 derives an action determination rule that maximizes an expected reward value specified in the reinforcement learning algorithm and performs learning processing in accordance with the action determination rule.

In other words, the learning execution unit 112 performs learning processing in accordance with (Equation 1) shown below specifying the action determination rule.

[Formula 1]

$$\pi^*(a\,|\,s) = \arg\max_a \sum_{s'} T(s,a,s')v(s') \qquad \text{... (Equation 1)}$$

In (Equation 1) shown above,

$\pi^*(a|s)$ is a function that returns an optimal strategy in a state (s), that is, an action (a) to be taken in the state (s).
T(s,a,s') is a function that represents state transition and represents that, in a case where the action (a) is performed in the state (s), the state (s) changes into a state (s').
v(s') means a total sum of rewards in a case of transition to the state (s').
argmax is a function that selects a maximum value.

(Equation 1) shown above is an equation (action determination rule) for selecting, from actions a each causing the state s to change into the state s', an action a maximizing the reward total sum v(s').

In other words, (Equation 1) is an action determination rule for determining an action (a) maximizing the expected reward in each of various states (s).

In the database 111, data of the state (S), the action (A), and the reward (R) at each time (t) is input from the processing execution apparatus 120 and stored as needed. That is, the database is updated as needed. The learning execution unit 114 performs update processing for the action determination rule (Equation 1) each time data in the database 111 is updated, for example.

As a result of this update processing, an optimal action to each of various states, that is, an optimal action for raising the reward, gradually becomes obvious.

The action determination unit 113 in the learning execution apparatus 110 uses the action determination rule expressed by (Equation 1) updated as needed in the learning processing in the learning execution unit 112 to determine a subsequent action to be executed by the processing execution unit 120.

In other words, the action determination unit 113 determines a subsequent action in accordance with the action determination rule $\pi^*(als)$ in (Equation 1) shown above.

To cause the processing execution apparatus 120 to execute an action (A) determined by the action determination unit 113, the determined action request unit 114 makes a request for causing an action execution unit 121 in the processing execution apparatus 120 to execute the determined action. As illustrated in the figure, action information (At) 101a is output. t is a parameter indicating time.

The action execution unit 121 in the processing execution apparatus 120 executes an action based on the action request input from the determined action request unit 114 in the learning execution apparatus 110, that is, an action based on the action information (At) 101a.

Action information (At) 101b regarding an action executed by the action execution unit 121 in the processing execution apparatus 120 is input into the action information input unit 115 in the learning execution apparatus 110 and is stored in the database 111.

The processing execution apparatus 120 further includes a state information acquisition unit 122 and a reward information acquisition unit 123.

The state information acquisition unit 122 in the processing execution apparatus 120 acquires state information (St) 102 indicating a state (S) at time (t) as needed and outputs the state information (St) to the state information input unit 116 in the learning execution unit 110.

The state information input unit 116 in the learning execution unit 110 stores in the database 111 the state information (St) 102 input from the state information acquisition unit 122 in the processing execution apparatus 120.

The state information that the state information acquisition unit 122 in the processing execution apparatus 120 acquires is information such as positional information and running information (speed and a direction) of a cleaning robot in a case where the processing execution apparatus 120 is the cleaning robot, for example.

Also, the state information is scene information indicating a scene of a game, a character position, running information (speed and a direction), and the like in a case where the processing execution apparatus 120 is a game execution apparatus.

The reward information acquisition unit 123 in the processing execution apparatus 120 acquires reward information (Rt) 103 indicating a state (S) at time (t) as needed and outputs the reward information (Rt) to the reward information input unit 117 in the learning execution unit 110.

The reward information input unit 117 in the learning execution unit 110 stores in the database 111 the reward information (Rt) 103 input from the reward information acquisition unit 123 in the processing execution apparatus 120.

The reward information that the reward information acquisition unit 123 in the processing execution apparatus 120 acquires includes a score of a game, or the like in a case where the processing execution apparatus 120 is a game execution apparatus, for example.

The reward information is evaluation information or the like generated along with completion of cleaning, for example, in a case where the processing execution apparatus 120 is a cleaning robot. A specific example thereof is evaluation information for efficiency based on time information, route information, and the like from start to end of cleaning.

Note that, in a case where no reward information acquisition unit 123 is set in the processing execution apparatus 120, a configuration may be employed in which a reward calculation unit is set in the learning execution apparatus 110 and calculates a reward with use of a preset reward calculation algorithm on the basis of the state information and the action information input from the processing execution apparatus 120.

For example, in accordance with a reward calculation equation (Equation 2) shown below based on a state (s) generated after an action (a) executed in the action execution unit 121 in the processing execution apparatus 120, reward calculation processing is performed.

$$R=f(s) \quad ... \quad (Equation\ 2)$$

Alternatively, in accordance with a reward calculation equation (Equation 3) shown below based on two parameters including a state (s) generated after an action (a) executed in the action execution unit 121 in the processing execution apparatus 120 and the action (a), reward calculation processing is performed.

$$R=f(s,a) \quad \ldots \quad (Equation \ 3)$$

Which reward calculation equation is to be applied, (Equation 2) or (Equation 3) shown above, is defined in advance.

In this case, a reward (Rt) that the reward calculation unit in the learning execution apparatus 110 has calculated is stored in the database 111.

In the database 111 in the learning execution apparatus 110, a data set including the action information (At), the state information (St), and the reward information (Rt) is stored as needed.

With use of data (states (S), actions (A), and rewards (R)) including data newly stored in the database 111, the learning execution unit 112 in the learning execution apparatus 110 performs learning processing in accordance with (Equation 1) shown below, which is the action determination rule that maximizes an expected reward value specified in the reinforcement learning algorithm.

$$\pi^*(a|s) \quad \ldots \quad (Equation \ 1)$$

By repeating this processing, an action by which the reward is set to be maximized can be predicted, and processing in accordance with the predicated action can be executed.

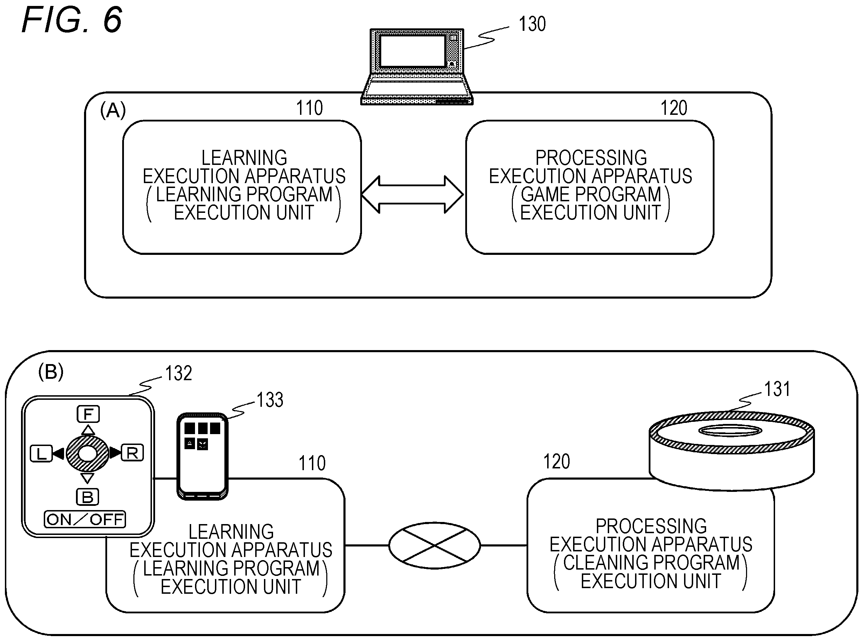

Next, specific examples of the learning execution apparatus 110 and the processing execution apparatus 120 illustrated in Fig. 5 will be described with reference to Fig. 6 and subsequent figures.

As described above, the learning execution apparatus 110 and the processing execution apparatus 120 can be set as one information processing apparatus or can be set as individual apparatuses.

Fig. 6(A) illustrates an example in which a PC 130 serving as one information processing apparatus includes the learning execution apparatus 110 and the processing execution apparatus 120.

The PC 130 includes a learning program execution unit functioning as the learning execution apparatus 110 and, for example, a game program execution unit functioning as the processing execution apparatus 120.

The game program execution unit performs, for example, the game described above with reference to Fig. 3 or 4 by executing a game program stored in a storage unit of the PC 130.

As a result of execution of the game by means of the game program execution unit functioning as the processing execution apparatus 120, changes of states such as an action of a character, a game scene, and a position of the character occur, for example. The action information and state information are input into the learning execution apparatus 110 serving as the learning program execution unit to cause learning processing to be performed.

Fig. 6(B) illustrates an example in which the learning execution apparatus 110 and the processing execution apparatus 120 are set as individual apparatuses.

Fig. 6(B) illustrates a cleaning robot 131, and a remote control 132 and a smartphone 133 performing operation control for the cleaning robot 131.

The remote control 132 or the smartphone 133 functions as a controller performing operation control for the cleaning robot 131.

The remote control 132 or the smartphone 133 includes the learning program execution unit functioning as the learning execution apparatus 110.

The cleaning robot 131 includes a cleaning program execution unit functioning as the processing execution unit 120.

As a result of execution of the cleaning by means of the cleaning program execution unit functioning as the processing execution apparatus 120, changes of states such as an action, a position, running information, and the like of the cleaning robot occur, for example. The action information and state information are input into the remote control 132 or the smartphone 133 including the learning program execution unit to cause learning processing to be performed.

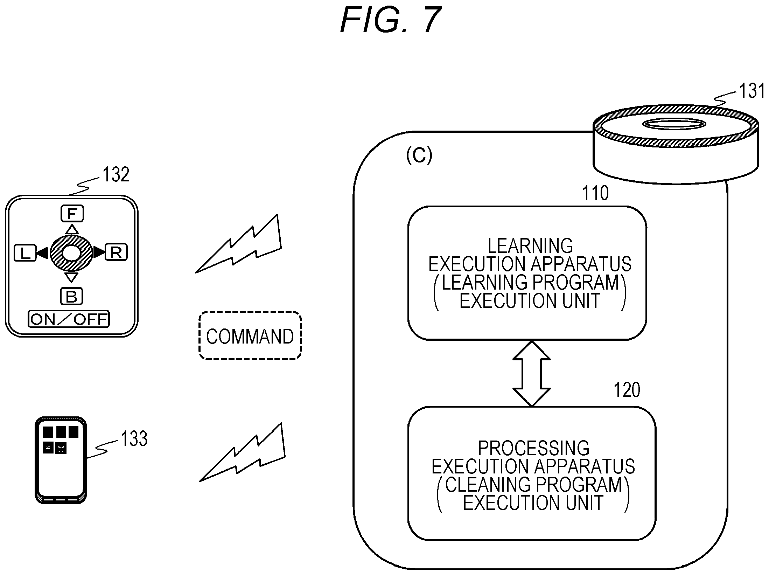

Fig. 7(C) illustrates an example of setting in which the learning execution apparatus 110 and the processing execution apparatus 120 are included in the cleaning robot 131.

The cleaning robot 131 includes a learning program execution unit functioning as the learning execution apparatus 110 and a cleaning program execution unit functioning as the processing execution unit 120.

As a result of execution of the cleaning by means of the cleaning program execution unit functioning as the processing execution apparatus 120, changes of states such as an action, a position, running information, and the like of the cleaning robot occur, for example. The action information and state information are input into the learning program execution unit in the cleaning robot 131 to cause learning processing to be performed.

In the example illustrated in Fig. 7, the remote control 132 or the smartphone 133 functions as a remote control used when a user wishes to cause cleaning to be performed in accordance with the user's will.

As described with reference to Figs. 6 and 7, the functions of the learning execution apparatus 110 and the processing execution apparatus 120 described with reference to Fig. 5 can be fulfilled as one apparatus or as individual apparatuses.

Note that various configurations are available instead of the configurations described with reference to Figs. 6 and 7.

With the reinforcement learning processing with use of the learning execution apparatus 110 and the processing execution apparatus 120 described with reference to Fig. 5, processing executed by the processing execution apparatus 120 can gradually be changed to processing in which the reward is set to be higher.

However, as described above, as a problem in the learning processing by means of the reinforcement learning algorithm, there is a problem of in which state a point at which a reward is given is provided.

As one typical example of setting a reward, there is setting in which one reward is given when, from a processing start state (start), a processing end state (goal) in which a final goal is completed is reached. However, in this setting, the learning execution apparatus cannot input effective reward information at all until completion of the processing.

The agent (robot) can perform different actions at each of various branch points, such as each of points at which a plurality of actions can be selected, existing from a processing start state to a processing end state, and in a case where the agent (robot) repeats incorrect actions, it consequently takes significant time for the agent (robot) to reach the final goal.

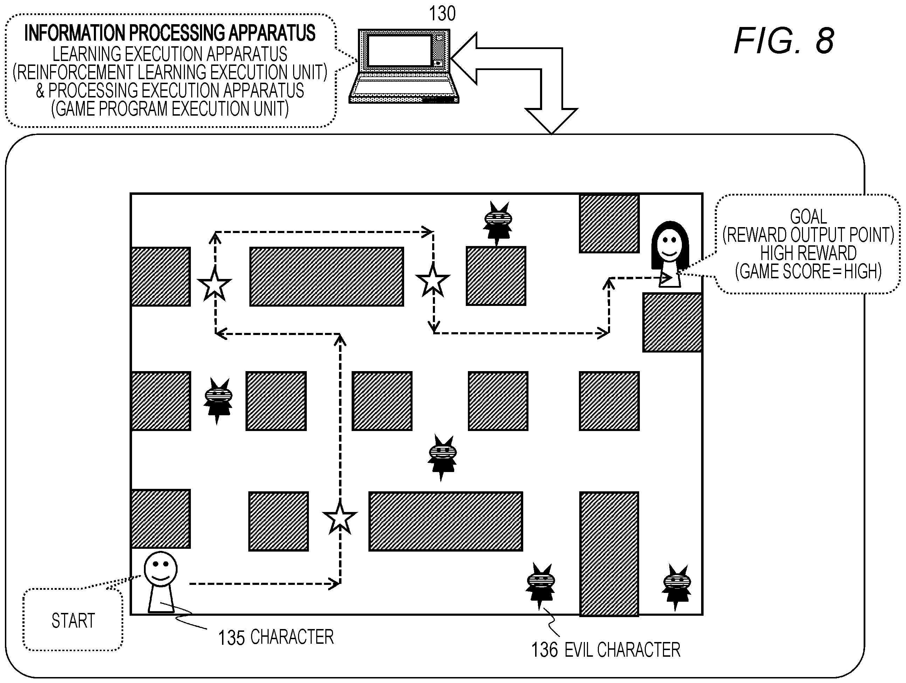

A typical example of setting a reward, in which one reward is given when, from a processing start state (start), a processing end state (goal) in which a final goal is completed is reached, will be described with reference to Fig. 8 and the subsequent figures.

The example illustrated in Fig. 8 is an example of the PC 130 described above with reference to Fig. 6(A), that is, an example in which the PC 130 serving as one information processing apparatus includes the learning execution apparatus 110 and the processing execution apparatus 120.

The PC 130 includes a learning program execution unit functioning as the learning execution apparatus 110 and, for example, a game program execution unit functioning as the processing execution apparatus 120.

The game program execution unit executes a game illustrated in Fig. 8.

The game illustrated in Fig. 8 is a game in which a character 135 located at a start position on the lower left is caused to reach a goal on the upper right.

The character 135 is moved to the right, left, front, and rear along the route in the scene to reach the goal on the upper right.

The game score is higher as more stars on the route are picked up. This game score is a reward in the reinforcement learning processing.

Evil characters 136 are on the route. In a case of collision with one of the evil characters 136, the game ends, which results in score = 0 (no reward).

In a case where the character 135 is caused to go forward along the dashed-line route illustrated in Fig. 8 to reach the goal, this means that the character 135 will pick up three stars and reach the goal, and that a high score can be obtained. In other words, the reward is high.

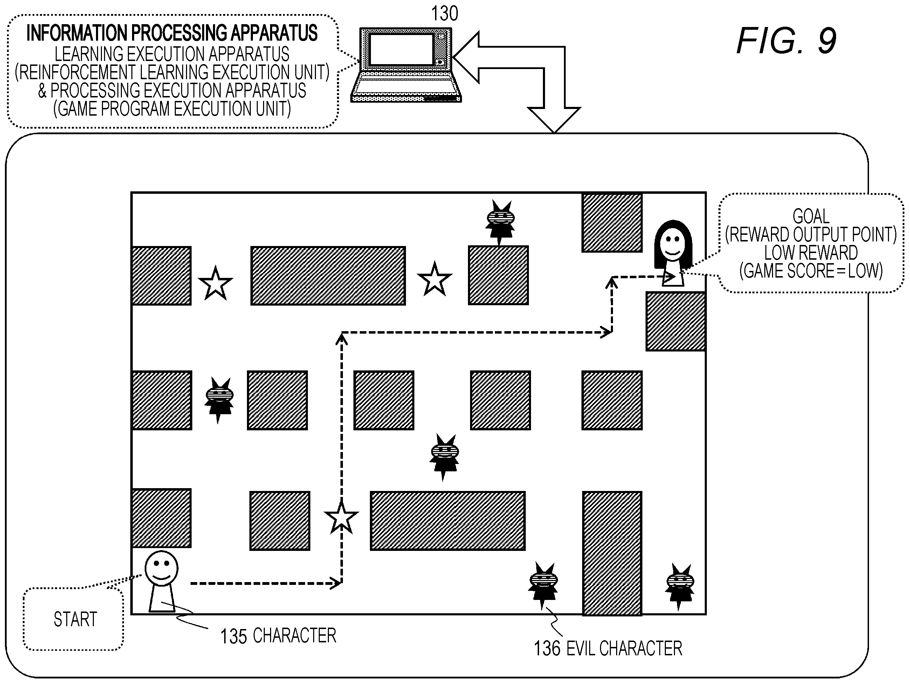

An example illustrated in Fig. 9 is an example in which the character 135 reaches the goal along a different route from one illustrated in Fig. 8.

In a case where the character 135 is caused to go forward along the dashed-line route illustrated in Fig. 9 to reach the goal, this means that the character 135 will pick up one star and reach the goal. In this case, the score is lower than that in the setting illustrated in Fig. 8, in which three stars are picked up. In other words, the reward is low.

For example, in a case where the reinforcement learning processing is performed in such reward setting with use of the system described with reference to Fig. 5, a route along which a higher reward can be obtained, that is, the route illustrated in Fig. 8, can finally be found.

However, in the reward setting described with reference to Figs. 8 and 9, that is, reward setting in which one reward is given when, from a processing start state (start), a processing end state (goal) in which a final goal is completed is reached, learning processing time to find a route (the route illustrated in Fig. 8) along which a high reward is finally obtained is extended.

As is understood with reference to Figs. 8 and 9, there are multiple routes that can be selected as routes from the start to the goal. In the reinforcement learning processing, processing of sequentially executing (taking action on) these multiple routes and analyzing a reward for each of the action results needs to be repeated.

From the start to the goal, there are many branch points, that is, points at which a plurality of actions can be selected.

The character 135 can perform different actions at each of the branch points, and in a case where the character 135 repeats incorrect actions, this causes a problem in which it consequently takes significant time to find a high-reward route giving a maximum score.

[2. About Embodiment of Achieving Efficient Learning Processing]

Hereinbelow, a configuration and processing of the information processing apparatus according to the present disclosure, that is, the information processing apparatus achieving efficient learning processing, will be described.

By applying processing according to the present disclosure described below, even a general user having no special programming skill can execute efficient learning processing, and specifically, can efficiently execute reinforcement learning in which respective parameters including an action (A), a state (S), and a reward (R) are applied.

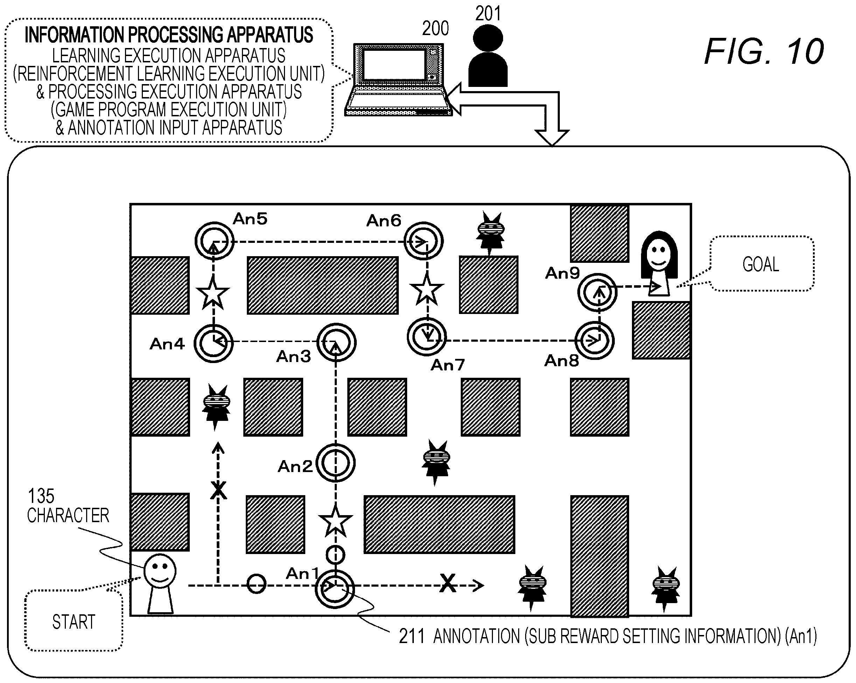

Referring to Fig. 10, an example of learning processing that the information processing apparatus according to the present disclosure executes will be described.

A PC 200 serving as an example of the information processing apparatus illustrated in Fig. 10 includes a learning execution apparatus and a processing execution apparatus in a similar manner to the PC 130 described above with reference to Figs. 6(A), 8, and 9.

The PC 200 includes a learning program execution unit functioning as the learning execution apparatus and a game program execution unit functioning as the processing execution apparatus.

The game program execution unit executes a game illustrated in Fig. 10.

The game illustrated in Fig. 10 is the same game as one described above with reference to Figs. 8 and 9 and is a game in which the character 135 located at the start position on the lower left is caused to reach the goal on the upper right.

The character 135 is moved to the right, left, front, and rear along the route in the scene to reach the goal on the upper right.

The game score is higher as more stars on the route are picked up. This game score is a reward in the reinforcement learning processing.

Evil characters are on the route. In a case of collision with one of the evil characters, the game ends, which results in score = 0 (no reward).

The PC 200 serving as an example of the information processing apparatus according to the present disclosure includes a function as an annotation input apparatus, as well as the learning program execution unit functioning as the learning execution apparatus and the game program execution unit functioning as the processing execution apparatus.

An annotation is setting information for a reward that is not originally set in the processing execution program, which is the game execution program in this example.

Reward setting information which is the annotation is referred to as sub reward setting information.

Note that setting information for a reward that is originally set in the game execution program is referred to as basic reward setting information.

The reward (game score) that can be obtained when the character 135 reaches the goal as described with reference to Figs. 8 and 9 is a reward that is originally set in the game execution program and is basic reward setting information.

Sub reward setting information which is the annotation can freely be input and set via the annotation input apparatus by a user 201 operating the PC 200 serving as an example of the information processing apparatus according to the present disclosure.

Note that, in the configuration illustrated in Fig. 10, the annotation input apparatus is incorporated in the PC 200. Specifically, an input unit of the PC 200 such as a keyboard and a mouse functions as the annotation input apparatus.

The user 201 can freely input the annotation (sub reward setting information) via the input unit of the PC 200 such as a keyboard and a mouse.

For example, when a game screen illustrated in Fig. 10 is displayed on a display unit of the PC 200, and the character 135 is moved and reaches a predetermined position, the annotation (sub reward setting information) is input.

Referring to Fig. 10, an example of an annotation input procedure will be described.

For example, the character 135 located at the start position on the game screen illustrated in Fig. 10 can select two routes including a route in the right direction (a route provided with a circle mark) and a route in the upper direction (a route provided with a cross mark).

The route in the right direction (the route provided with the circle mark) is a route corresponding to a route (correct answer) enabling a high score (high reward) to be obtained described above with reference to Fig. 8.

The user 201 moves the character 135 along the correct route in the right direction (the circle-mark-set route) to cause the character 135 to reach a branch point (a position at which (a double circle An1) illustrated in the figure is located).

Note that the respective marks illustrated in Fig. 10 such as the dashed-line route, the circle, the cross, and the double circle are illustrated for description and are not actually displayed on the display screen of the PC 200.

As illustrated in Fig. 10, when the character 135 reaches this branch point (the position at which (the double circle An1) illustrated in the figure is located), an annotation (sub reward setting information) (An1) 211 is input.

In other words, setting in which a sub reward can be obtained on the basis of the action of the character 135 moving along the correct route is employed.

The annotation (sub reward setting information) (An1) 211 that the user 201 has input is registered in the database in the learning execution apparatus.

Moreover, the user 201 moves the character 135 along the correct route (the route illustrated in Fig. 8), and at positions at which the character 135 reaches respective branch points, the user 201 sequentially inputs annotations (sub reward setting information) (An2 to An9) via the input unit of the PC 200 such as the keyboard and the mouse.

As a result of this annotation input processing, the annotations (sub reward setting information) (An1 to An9) are sequentially set on the correct route on which the highest reward can be obtained, as illustrated in Fig. 10.

These annotations (sub reward setting information) (An1 to An9) that the user 201 has input are registered in the learning execution apparatus and serve as reward information that can be used in learning processing in the reinforcement learning processing, that is, action determination processing that maximizes the expected reward.

By performing the learning processing with use of the annotations (sub reward setting information) (An1 to An9), the ideal route providing the high reward can be found efficiently, that is, in a short period.

In other words, efficiency improvement of the reinforcement learning processing is achieved.

Meanwhile, the annotation (sub reward setting information) that the user 201 has input is output to the learning execution apparatus and is stored in the database.

A specific example of data stored in the database in the learning execution apparatus due to the annotation that the user has input is information including a set of respective pieces of information of a state (S), an action (A), and a reward (R) at the time of setting the annotation.

As described above with reference to Fig. 5, the learning execution apparatus 110 receives respective pieces of information of a state (S) and an action (A) from the processing execution apparatus 120 as needed.

The learning execution apparatus 110 lets respective pieces of information of a state (S) and an action (A) updated at the time of input of an annotation (sub reward setting information) from the annotation input apparatus correspond to the sub reward setting information input from the annotation input apparatus and registers the corresponding information in the database.

Note that setting may be employed in which, at the same time as inputting the sub reward setting information from the annotation input apparatus, at least either the state (S) information or the action (A) information is input.

In this manner, data that the learning execution apparatus registers in the database in response to input of the annotation by the user is data including a set of respective pieces of information of a state (S), an action (A), and a sub reward (R) at the time of setting the annotation. Specifically, the data includes the following data, for example.

The state information (S) includes identification information of a scene of a game at the time of setting the annotation, an annotation setting position, and the like.

The action information (A) includes position information and movement information (a direction, speed, and the like) of the character at the time of setting the annotation.

The sub reward information (R) may be set in any manner and is preferably set as a lower reward than a basic setting reward obtained as the final goal is reached. This sub reward value may be defined in advance as a default value or may be allowed to be set by the user every time the user inputs an annotation.

Furthermore, as for the reward, not only a positive reward but also a negative reward may be set. For example, at a point at which the character goes along an "incorrect" route, which is not a correct route, an annotation can be input, and the annotation can be registered in the database in the learning execution apparatus as an annotation for which "the negative reward" is set.

For example, an arbitrary reward value such as a reward value in a reward range from -100 to +100 may be allowed to be input from the annotation input apparatus, and the reward value that the user has set arbitrarily may be allowed to be registered in the database in the learning execution apparatus.

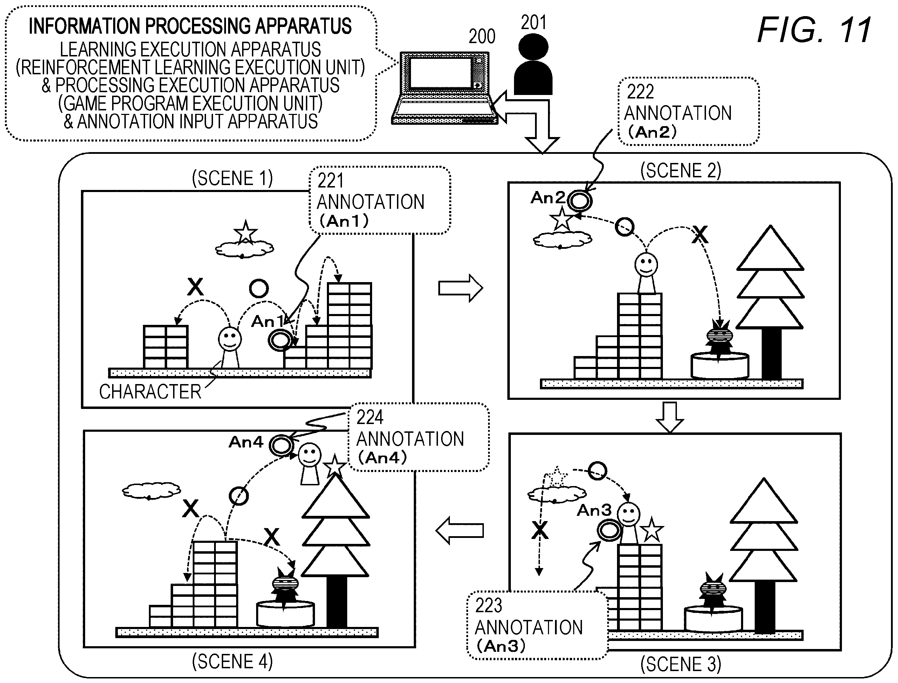

Next, referring to Fig. 11, an example of setting annotations (sub reward setting information) in a different game that the PC 200 executes will be described.

The game illustrated in Fig. 11 is similar to the game described above with reference to Fig. 4.

The game proceeds from Scene 1 to Scene 4 as illustrated in the figure.

In the game, on Scene 1, the character goes up the right stairs.

On Scene 2, the character gets on the left cloud.

On Scene 3, the character takes the star on the cloud and returns to the stair.

On Scene 4, the character puts the star on the tree.

The game includes these scenes.

On Scene 4, in a case where the character succeeds in putting the star on the tree, a high score can be obtained.

The PC 42 executing the game can memorize a correct action by means of the learning processing.

The basic reward setting information that is originally set in this game program is a reward (game score) that can be obtained when the character completes processing of putting the star on the tree on Scene 4.

The user 201 can input sub reward setting information other than this basic reward setting information by means of annotation input processing.

The user 201 inputs the annotation (sub reward setting information) by means of input processing via the input unit of the PC 200 such as the keyboard and the mouse.

For example, on Scene 1 illustrated in Fig. 11, the character can select two routes including a correct route for going up the right stairs (a route provided with a circle mark) and a route in the left direction (a route provided with a cross mark).

The user 201 moves the character along the correct route for going up the right stairs (the circle-mark-set route) to cause the character to reach a movement completion position or a movement halfway position (a position at which (a double circle An1) illustrated in the figure is located).

As illustrated in Fig. 10, when the character reaches the position at which the double circle An1 illustrated in the figure is located, an annotation (sub reward setting information) (An1) 221 is input.

In other words, setting in which a sub reward can be obtained on the basis of the action of the character moving along the correct route is employed.

The annotation (sub reward setting information) (An1) 221 that the user 201 has input is registered in the learning execution apparatus.

Subsequently, on Scene 2 illustrated in Fig. 11, the character can select two routes including a correct route for getting on the upper-left cloud (a route provided with a circle mark) and a route in the right direction (a route provided with a cross mark).

The user 201 moves the character along the correct route for getting on the left cloud (the circle-mark-set route) to cause the character to reach a movement completion position or a movement halfway position (a position at which (a double circle An2) illustrated in the figure is located).

As illustrated in Fig. 11, when the character reaches the position at which the double circle An2 illustrated in the figure is located, an annotation (sub reward setting information) (An2) 222 is input.

In other words, setting in which a sub reward can be obtained on the basis of the action of the character moving along the correct route is employed.

The annotation (sub reward setting information) (An2) 222 that the user 201 has input is registered in the learning execution apparatus.

Subsequently, on Scenes 3 and 4, the character is moved to reach positions at which double circles An3 and An4 illustrated in the figure are located, and annotations (sub reward setting information) (An3) 223 and (An4) 224 are input.

In other words, setting in which a sub reward can be obtained on the basis of the action of the character moving along the correct route is employed.

As a result of this annotation input processing, the annotations (sub reward setting information) (An1 to An4) are sequentially set on the correct route on which the highest score (highest reward) can be obtained, as illustrated in Fig. 11.

These annotations (sub reward setting information) (An1 to An4) that the user 201 has input are registered in the database in the learning execution apparatus and serve as reward information that can be used in learning processing in the reinforcement learning processing, that is, action determination processing that maximizes the expected reward.

By performing the learning processing with use of the annotations (sub reward setting information) (An1 to An4), the ideal route providing the high reward can be found efficiently in a short period.

In other words, efficiency improvement of the reinforcement learning processing is achieved.

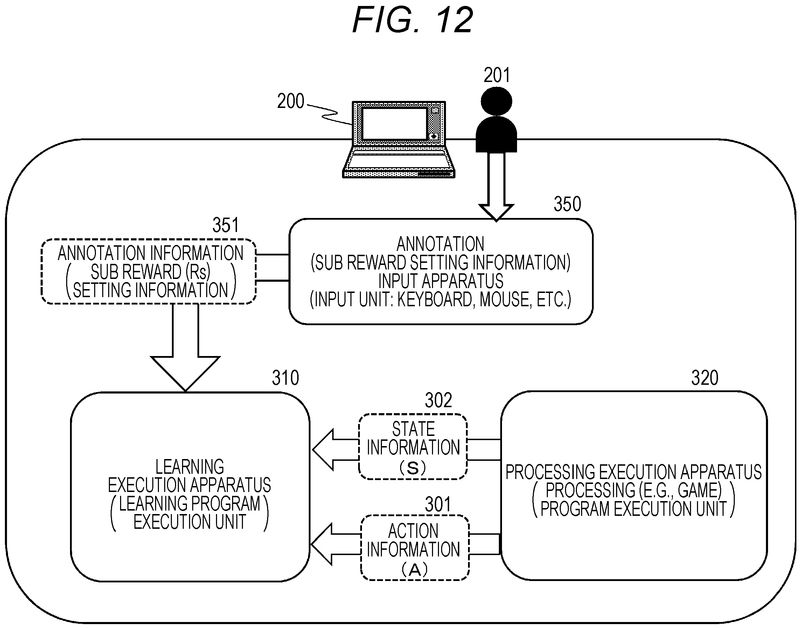

Fig. 12 illustrates an example of a configuration relationship among a learning execution apparatus 310, a processing execution apparatus 320, and an annotation input apparatus 350.

The example illustrated in Fig. 12 is an example in which the learning execution apparatus 310, the processing execution apparatus 320, and the annotation input apparatus 350 are incorporated in one information processing apparatus, that is, the PC 200.

The learning execution apparatus 310, the processing execution apparatus 320, and the annotation input apparatus 350 may be set as components in one information processing apparatus or may be set as separate apparatuses.

In the example illustrated in Fig. 12, the annotation input apparatus 350 includes an input unit of the PC 200, that is, a keyboard, a mouse, or the like.

The user 201 can input annotation information (sub reward (Rs) setting information) 351 with use of an annotation input apparatus 350 at an arbitrary time.

The annotation information (sub reward (Rs) setting information) 351 is input into the learning execution apparatus 310 and is stored in the database.

The learning execution apparatus 310 also receives state information (S) 302 and action information (A) 301 sequentially from the processing execution apparatus 320.

The learning execution apparatus 310 lets the annotation information (sub reward (Rs) setting information) 351 input from the annotation input apparatus 350 correspond to the state information (S) 302 and the action information (A) 301 having the closest input timing to input timing of this annotation information 351 and stores the corresponding information in the database.

Note that the example illustrated in Fig. 12 is illustrative. As another example, a configuration in which the state information (S) and the action information (A) are input into the learning execution apparatus 110 along with input of the annotation information (sub reward (Rs) setting information) 351 from the annotation input apparatus 250 may be employed.

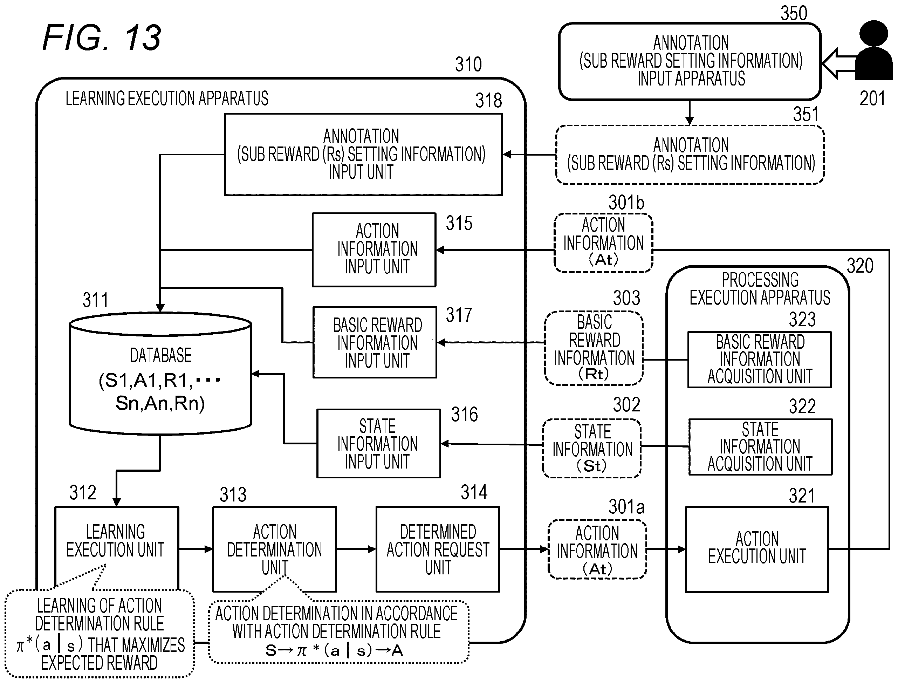

Fig. 13 illustrates a configuration example of an information processing system (information processing apparatus) according to the present disclosure.

The information processing system illustrated in Fig. 13 includes the learning execution apparatus 310 and the processing execution apparatus 320, in a similar manner to that of the system described above with reference to Fig. 5, and the annotation (sub reward setting information) input apparatus 350.

Note that these three apparatuses can be set as one information processing apparatus or can be set as individual apparatuses.

The learning execution apparatus 310 illustrated in Fig. 13 is an apparatus executing learning processing in accordance with the reinforcement learning algorithm.

Also, the processing execution apparatus 320 is an apparatus executing specific processing. For example, in a case of a cleaning robot, the processing execution apparatus 120 is an apparatus running by itself and performing cleaning. In another example, the processing execution apparatus 120 is an apparatus executing a game program and performing a game or the like.

The learning execution apparatus 310 illustrated in Fig. 13 includes the following components in a similar manner to that of the learning execution apparatus 110 described above with reference to Fig. 5. That is, the learning execution apparatus 310 includes a database 311, a learning execution unit 312, an action determination unit 313, a determined action request unit 314, an action information input unit 315, a state information input unit 316, and a basic reward information input unit 317.

The learning execution apparatus 310 illustrated in Fig. 13 further includes an annotation (sub reward (Rs) setting information) input unit 318, which is a component not included in the learning execution apparatus 110 described with reference to Fig. 5.

Unlike the learning execution apparatus 110 illustrated in Fig. 5, the learning execution apparatus 310 illustrated in Fig. 13 receives annotation (sub reward setting information) 351 from the annotation (sub reward setting information) input apparatus 350.

The user 201 can input the annotation (sub reward setting information) 351 with use of the annotation (sub reward setting information) input apparatus 350 at an arbitrary time.

The annotation (sub reward setting information) 351 is setting information regarding a reward that can arbitrarily be set by the user 201, that is a sub reward (Rs), as described above with reference to Figs. 10 and 11.

The learning execution apparatus 310 stores in the database 311 the annotation (sub reward setting information) 351 input from the annotation (sub reward setting information) input apparatus 350 via the annotation (sub reward setting information) input unit 318.

Data stored in the database 311 in the learning execution apparatus 310 is data including a set of respective pieces of information of a state (S), an action (A), and a reward (R) at the time of inputting the annotation in addition to information described above with reference to Fig. 5.

In a similar manner to that of the processing described above with reference to Fig. 5, the learning execution apparatus 310 receives state information (St) 302, action information (At) 301b, and basic reward information (Rt) 303 from the processing execution apparatus 320 as needed and stores the information in the database 311.

The learning execution apparatus 310 illustrated in Fig. 13 lets the state (St) and the action (At) at the time of input of the annotation correspond to the annotation (sub reward (Rs) setting information) 351 input from the annotation (sub reward setting information) input apparatus 350 and stores the corresponding information in the database 311.

Database storing processing of the data is not illustrated in Fig. 13 and is executed under control of a control unit in the learning execution apparatus 310.

Note that, in order to distinguish between a reward input from the processing execution apparatus 320 and a reward input from the annotation (sub reward setting information) input apparatus 350,

the reward input from the processing execution apparatus 320 is referred to as a basic reward (Rt), and

a reward included in the annotation (sub reward setting information) 351 input from the annotation (sub reward setting information) input apparatus 350 is referred to as a sub reward (Rs).

In this manner, in the configuration illustrated in Fig. 13, the learning execution apparatus 310 stores in the database 311 not only the state information (St) 302, the action information (At) 301b, and the basic reward information (Rt) 303 input from the processing execution apparatus 320 but also the annotation (sub reward (Rs) setting information) 351 input from the annotation (sub reward setting information) input apparatus 350, and the state information (St) 302 and the action information (At) 301b at the time.

Note that data that the learning execution apparatus 310 registers in the database 311 in response to input of the annotation 351 by the user 201 is data including a set of respective pieces of information of a state (S), an action (A), and a reward (R) at the time of setting the annotation as described above. Specifically, the data includes the following data, for example.

The state information (S) includes identification information of a scene of a game at the time of setting the annotation, an annotation setting position, and the like.

The action information (A) includes position information and movement information (a direction, speed, and the like) of the character at the time of setting the annotation.

The reward information (R) may be set in any manner and is set as a lower reward than a basic setting reward obtained as the final goal is reached. This sub reward value may be defined in advance as a default value or may be allowed to be set by the user every time the user inputs an annotation.

Furthermore, as for the reward, not only a positive reward but also a negative reward may be set. For example, at a point at which the character goes along an incorrect route, an annotation can be input, and the annotation can be registered in the database in the learning execution apparatus as an annotation for which "the negative reward" is set.

For example, an arbitrary reward value such as a reward value in a reward range from -100 to +100 may be allowed to be input from the annotation input apparatus, and the reward value that the user has set arbitrarily may be allowed to be registered in the database in the learning execution apparatus.

In a similar manner to that of the learning execution unit 112 in the learning execution apparatus 110 described above with reference to Fig. 5, the learning execution unit 312 in the learning execution apparatus 310 illustrated in Fig. 13 performs learning processing in accordance with the above-mentioned learning algorithm of the reinforcement learning.

Specifically, with use of, for example, time-series data of states (S), actions (A), and rewards (R) stored in the database 311, the learning execution unit 312 derives an action determination rule that maximizes an expected reward value specified in the reinforcement learning algorithm and performs learning processing in accordance with the action determination rule.

In other words, the learning execution unit 312 performs learning processing in accordance with (Equation 1) shown below specifying the action determination rule described above with reference to Fig. 5.

[Formula 2]

$$\pi^*(a \mid s) = \arg\max_a \sum_{s'} T(s, a, s')v(s') \quad \text{...(Equation 1)}$$

In (Equation 1) shown above,

$\pi^*(a|s)$ is a function that returns an optimal strategy in a state (s), that is, an action (a) to be taken in the state (s).
$T(s,a,s')$ is a function that represents state transition and represents that, in a case where the action (a) is performed in the state (s), the state (s) changes into a state (s').
$v(s')$ means a total sum of rewards in a case of transition to the state (s').
argmax is a function that selects a maximum value.

(Equation 1) shown above is an equation (action determination rule) for selecting, from actions a each causing the state s to change into the state s', an action a maximizing the reward total sum v(s').

In other words, (Equation 1) is an action determination rule for determining an action (a) maximizing the expected reward in each of various states (s).

Note that new data is sequentially input into the database 311, and that database update processing is executed per input of new data. The learning execution unit 314 performs update processing for the action determination rule (Equation 1) each time data in the database 311 is updated, for example.

As a result of this update processing, an optimal action to each of various states, that is, an optimal action for raising the reward, gradually becomes obvious.

The database 311 in the learning execution apparatus 310 illustrated in Fig. 13 has stored therein not only the state information (St) 302, the action information (At) 301b, and the basic reward information (Rt) 303 input from the processing execution apparatus 320 but also the annotation (sub reward (Rs) setting information) 351 input from the annotation (sub reward setting information) input apparatus 350, and the state information (St) 302 and the action information (At) 301b at the time.

In other words, the database 311 has stored therein a denser data set of the states (S), the actions (A), and the rewards (R) than the database 111 in the learning execution apparatus 110 described above and illustrated in Fig. 5 does.

Accordingly, the learning execution unit 312 in the learning execution apparatus 310 illustrated in Fig. 13 can perform learning processing with use of a larger amount of data (states (S), actions (A), and rewards (R)).

As a result, learning efficiency is improved, and an optimal action for raising the reward can be found more promptly.

In other words, in the learning processing, learning with use of the annotation (sub reward (Rs) setting information) 351 input from the annotation (sub reward setting information) input apparatus 350 in advance. In a case where the processing execution apparatus 320 acts by means of autonomous control, for example, a sub reward is obtained in a case where the processing execution apparatus 320 is in an equal or similar state to an annotation set in advance.

Note that determination processing of whether or not the state of the processing execution apparatus 320 is the similar state to the annotation can be executed by applying analysis data of the states (S) and the actions (A) input from the processing execution apparatus 320, for example. For example, processing for preparing and analyzing a matrix of the states, or the like is available.

The action determination unit 313 in the learning execution apparatus 310 uses the action determination rule expressed by (Equation 1) updated as needed in the learning processing in the learning execution unit 312 to determine a subsequent action to be executed by the processing execution unit 320.

In other words, the action determination unit 313 determines a subsequent action in accordance with the action determination rule $\pi^*(a|s)$.

To cause the processing execution apparatus 320 to execute an action (A) determined by the action determination unit 313, the determined action request unit 314 makes a request for causing an action execution unit 321 in the processing execution apparatus 320 to execute the determined action. As illustrated in the figure, action information (At) 301a is output. t is a parameter indicating time.

The action execution unit 321 in the processing execution apparatus 320 executes an action based on the action request input from the determined action request unit 314 in the learning execution apparatus 310, that is, an action based on the action information (At) 301a.

Action information (At) 301b regarding an action executed by the action execution unit 321 in the processing execution apparatus 320 is input into the action information input unit 315 in the learning execution apparatus 110 and is stored in the database 311.

The processing execution apparatus 320 further includes a state information acquisition unit 322 and a basic reward information acquisition unit 323.

The state information acquisition unit 322 in the processing execution apparatus 320 acquires state information (St) 302 indicating a state (S) at time (t) as needed and outputs the state information (St) to the state information input unit 316 in the learning execution unit 310.

The state information input unit 316 in the learning execution unit 310 stores in the database 311 the state information (St) 302 input from the state information acquisition unit 322 in the processing execution apparatus 320.

The state information that the state information acquisition unit 322 in the processing execution apparatus 320 acquires includes information such as positional information and running information (speed and a direction) of a cleaning robot in a case where the processing execution apparatus 320 is the cleaning robot, for example.

Also, the state information includes scene information indicating a scene of a game, a character position, running information (speed and a direction), and the like in a case where the processing execution apparatus 320 is a game execution apparatus.

Furthermore, the basic reward information acquisition unit 323 in the processing execution apparatus 320 acquires basic reward information (Rt) 303 indicating a state (S) at time (t) as needed and outputs the basic reward information (Rt) to the reward information input unit 317 in the learning execution unit 310.

The basic reward information input unit 317 in the learning execution unit 310 stores in the database 311 the basic reward information (Rt) 303 input from the basic reward information acquisition unit 323 in the processing execution apparatus 320.

The reward information that the reward information acquisition unit 323 in the processing execution apparatus 320 acquires includes a score of a game, or the like in a case where the processing execution apparatus 320 is a game execution apparatus, for example.

The reward information is evaluation information or the like generated along with completion of cleaning, for example, in a case where the processing execution apparatus 320 is a cleaning robot. A specific example thereof is evaluation information for efficiency based on time information, route information, and the like from start to end of cleaning.

Note that, in a similar manner to that of the configuration described above with reference to Fig. 5, in a case where no basic reward information acquisition unit 323 is set in the processing execution apparatus 320, a reward calculation unit may be set in the learning execution apparatus 310 and may calculate a reward with use of a preset reward calculation algorithm on the basis of the state information and the action information input from the processing execution apparatus 320.

In this case, a reward (Rt) that the reward calculation unit in the learning execution apparatus 310 has calculated is stored in the database 311.

As described above, the database 111 in the learning execution apparatus 310 illustrated in Fig. 13 has stored therein

the state information (St) 302, the action information (At) 301b, and the basic reward information (Rt) 303 input from the processing execution apparatus 320, and

the annotation (sub reward (Rs) setting information) 351 input from the annotation (sub reward setting information) input apparatus 350, and the state information (St) 302 and the action information (At) 301b at the time.

As a result, the database 311 has stored therein a denser data set of the states (S), the actions (A), and the rewards (R) than the database 111 described above and illustrated in Fig. 5 does, and the learning execution unit 312 can perform learning processing with use of a larger amount of data (states (S), actions (A), and rewards (R)).

As a result, learning efficiency is improved, and an optimal action for raising the reward can be made to be obvious more promptly.

The learning execution apparatus 310, the processing execution apparatus 320, and the annotation (sub reward setting information) input apparatus 350 illustrated in Fig. 13 may be set as one information processing apparatus as described above with reference to Fig. 12 or may be set as separate apparatuses.

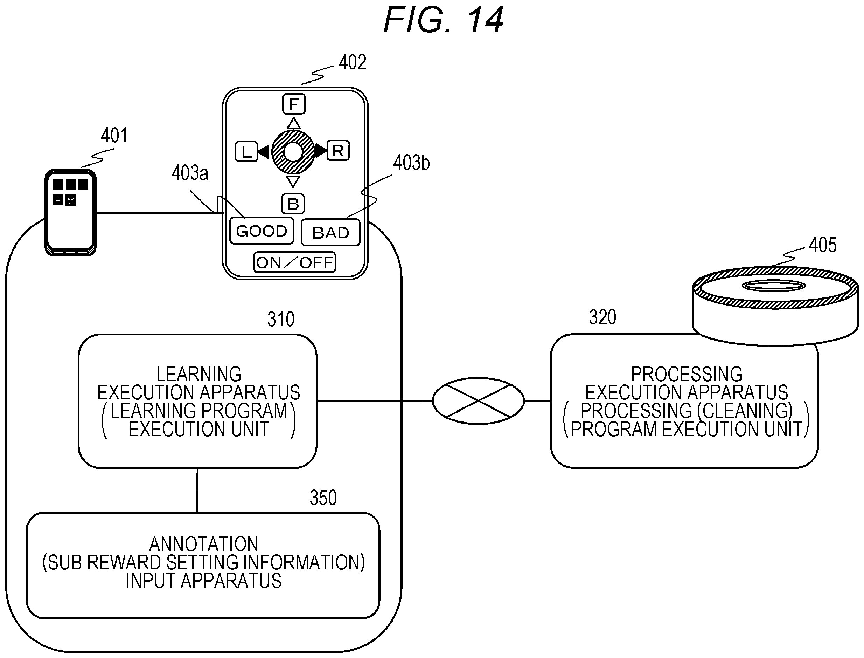

An apparatus configuration example in a case of the separate apparatuses will be described with reference to Fig. 14 and the subsequent figures.

Fig. 14 illustrates a configuration example in which the learning execution apparatus 310 and the annotation (sub reward setting information) input apparatus 350 are set as one apparatus, and in which the processing execution apparatus 320 is set as a separate apparatus.

Fig. 14 illustrates a cleaning robot 405, and a smartphone 401 and a remote control 402 serving as devices performing operation control for the cleaning robot 405.

The smartphone 401 or the remote control 402 functions as a controller performing operation control for the cleaning robot 405.

The smartphone 401 or the remote control 402 includes a learning program execution unit functioning as the learning execution apparatus 310 and an input unit functioning as the annotation (sub reward setting information) input apparatus 350.

In the remote control 402 illustrated in the figure, annotation (sub reward setting information) input units 403A and 403B are set.

For example, the annotation input unit 403a including a button [GOOD] is used for input of an annotation for which a positive reward is set.

On the other hand, the annotation input unit 403b including a button [BAD] is used for input of an annotation for which a negative reward is set.

The cleaning robot 405 includes a cleaning program execution unit functioning as the processing execution unit 420.

As a result of execution of the cleaning by means of the cleaning program execution unit functioning as the processing execution apparatus 420, changes of states such as an action, a position, running information, and the like of the cleaning robot occur, for example. The action information and state information are input into the smartphone 401 or the remote control 402 including the learning program execution unit to cause learning processing to be performed.

Moreover, the user can perform input processing of an annotation (sub reward setting information) via the input unit which is the smartphone 401 or the remote control 402 at an arbitrary time.

The input information is stored in the database in the learning execution apparatus 310 of the smartphone 401 or the remote control 402 and is used for later learning processing.

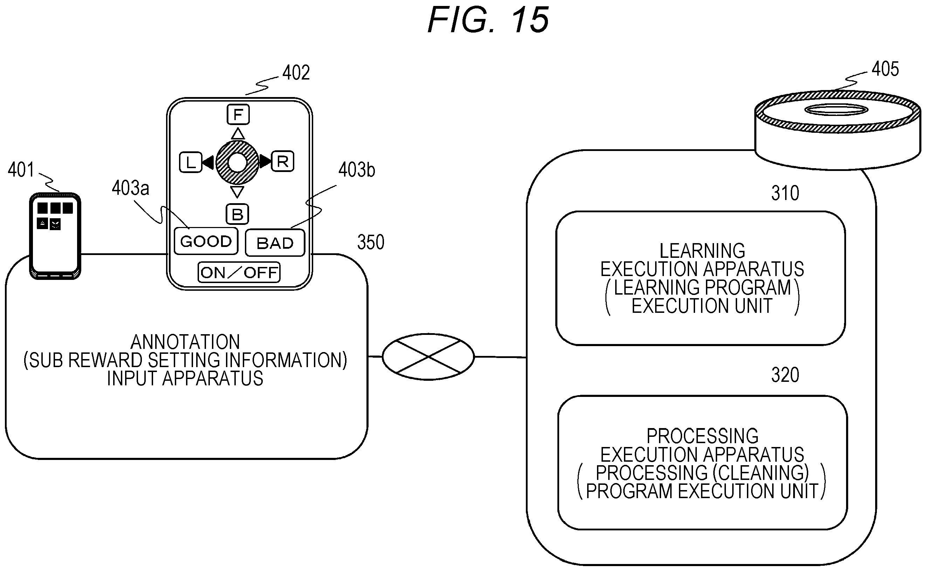

Fig. 15 illustrates a configuration in which the learning execution apparatus 310 and the processing execution apparatus 320 are set inside the cleaning robot 405, and in which the smartphone 401 or the remote control 402 is set as the annotation (sub reward setting information) input apparatus 350.

The cleaning robot 405 includes a learning program execution unit functioning as the learning execution apparatus 310 and a cleaning program execution unit functioning as the processing execution unit 320.

As a result of execution of the cleaning by means of the cleaning program execution unit functioning as the processing execution apparatus 320, changes of states such as an action, a position, running information, and the like of the cleaning robot occur, for example. The action information and state information are input into the learning program execution unit in the cleaning robot 405 to cause learning processing to be performed.

The user can perform input processing of an annotation (sub reward setting information) via the input unit which is the smartphone 401 or the remote control 402 functioning as the annotation (sub reward setting information) input apparatus 350 at an arbitrary time.

The input information is transmitted to the learning program execution unit functioning as the learning execution apparatus 310 in the cleaning robot 405, is stored in the database in the learning execution apparatus 310, and is used for later learning processing.

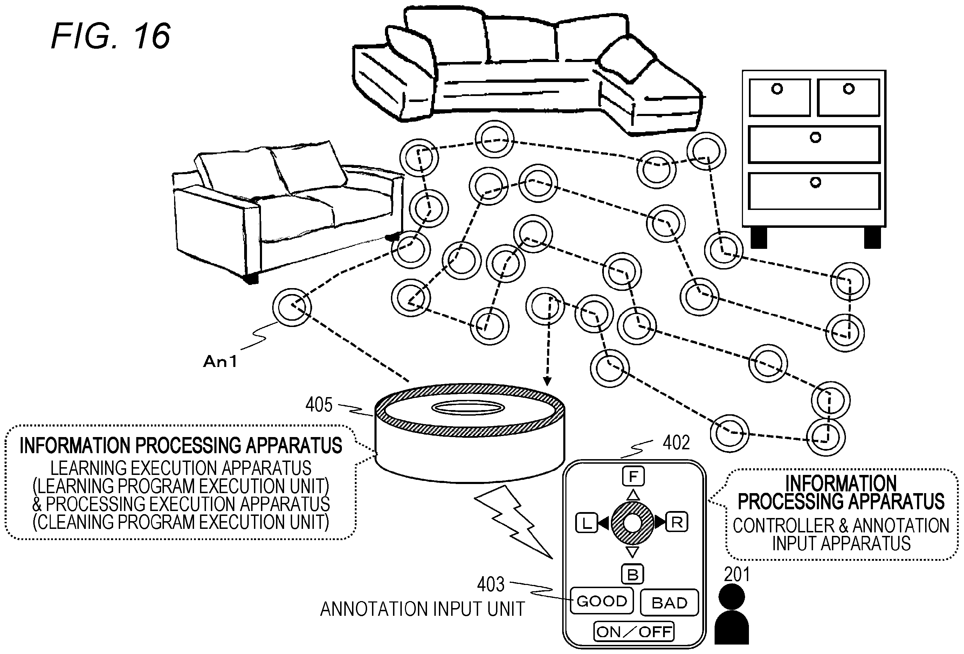

An annotation (sub reward setting information) input processing example with use of the remote control 402 in the configuration illustrated in Fig. 15 will be described with reference to Fig. 16.

The cleaning robot 405 illustrated in Fig. 16 includes therein the learning execution apparatus 310 and the processing execution apparatus 320.

The remote control 402 functions as a controller for the cleaning robot 405 and the annotation (sub reward setting information) input apparatus 350.

The cleaning robot 405 can freely move in response to an operation of the remote control 402 by the user 201.

The user 201 thinks a route for letting the cleaning robot 405 clean the inside of the room efficiently and lets the cleaning robot 405 move along the route for cleaning.

Moreover, annotation (sub reward setting information) input processing is executed at a plurality of points on the route on which cleaning is being executed.

The input information is transmitted to the learning program execution unit functioning as the learning execution apparatus 310 in the cleaning robot 405 and is stored in the database in the learning execution apparatus 310.

The data is used for later learning processing.

Due to the learning processing, the cleaning robot 405 can perform cleaning autonomously along the route on which sub rewards can be obtained, that is, the route set by the user.

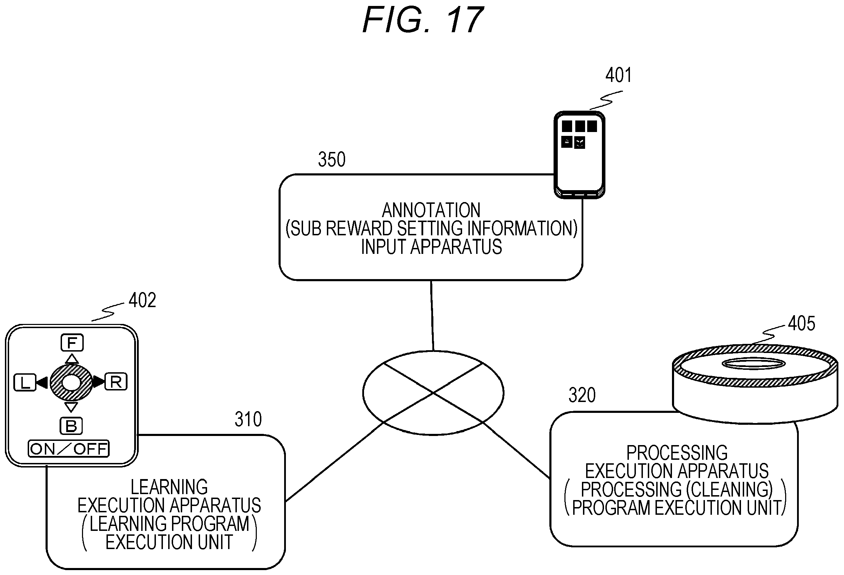

An example illustrated in Fig. 17 is an example in which the learning execution apparatus 310, the processing execution apparatus 320, and the annotation (sub reward setting information) input apparatus 350 are set as separate apparatuses.

The processing execution apparatus 320 is the cleaning robot 405,

the learning execution apparatus 310 is the remote control 402, and
the annotation (sub reward setting information) input apparatus 350 is the smartphone 401.

These three apparatuses respectively execute communication and processing.

The cleaning robot 405 executes cleaning by means of the cleaning program execution unit functioning as the processing execution apparatus 320 and transmits respective pieces of information of an action (A), a state (S), and a basic reward (R) to the remote control 402.

On the smartphone 401 functioning as the annotation (sub reward (Rs) setting information) input apparatus 350, input processing of an annotation (sub reward setting information) is performed by the user at an arbitrary time, and the input information is transmitted to the remote control 402.

The remote control 402 includes the learning program execution unit functioning as the learning execution apparatus 310 and stores in the database respective pieces of information of the action (A), the state (S), and the basic reward (R) input from the cleaning robot 405.

The remote control 402 also stores in the database the annotation (sub reward (Rs) setting information) input from the smartphone 401 functioning as the annotation (sub reward setting information) input apparatus 350 as a set including respective pieces of information of an action (A), a state (S), and the reward (Rs) at the time.

The remote control 402 executes learning processing with use of the data stored in the database in the learning program execution unit functioning as the learning execution apparatus 310 and determines an optimal cleaning route by means of the learning.

Thereafter, only by activating the cleaning robot 405 by means of the remote control 402, a command for the learned route is transmitted from the remote control 402 to the cleaning robot 405 to enable cleaning along the optimal route to be performed.

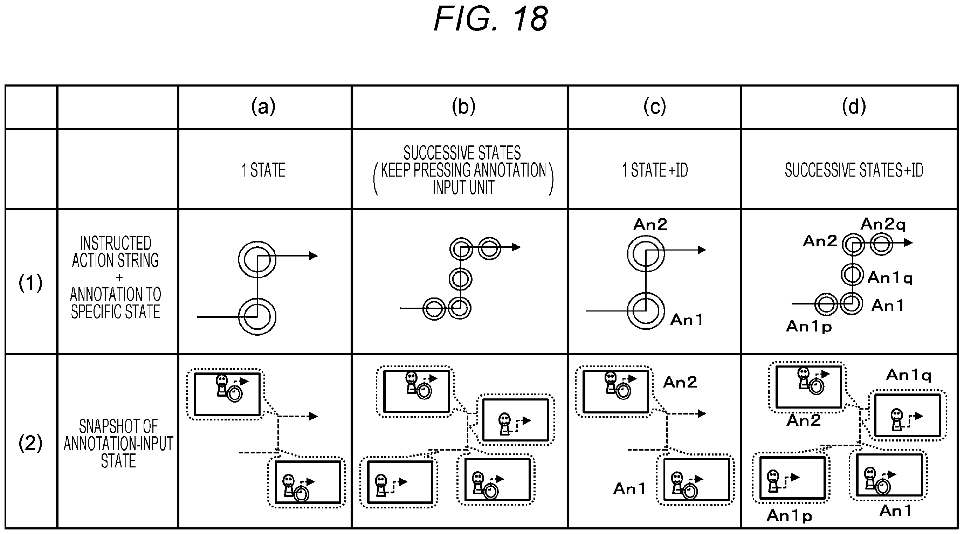

Next, examples of information in the annotation (sub reward setting information) that can be input with use of the annotation (sub reward setting information) input apparatus 350 will be described with reference to Fig. 18.

In a case where an annotation (sub reward setting information) is input with use of the annotation (sub reward setting information) input apparatus 350, an example way is to input only setting information regarding a sub reward (Rs) from the annotation (sub reward setting information) input apparatus 350 into the learning execution apparatus 310, to input the other information including an action (A) and a state (S) from the processing execution apparatus 320, and to store the input information in the database, as described above.

Alternatively, from the annotation (sub reward setting information) input apparatus 350, not only the setting information regarding the sub reward (Rs) but also the action (A) and the state (S) may be input.

Fig. 18 illustrates variation examples of input information input from the annotation (sub reward setting information) input apparatus 350.

Fig. 18 illustrates eight different input information examples of the annotation (sub reward setting information) input from the annotation (sub reward setting information) input apparatus 350.

Item (1) illustrates examples of inputting an instructed action string and an annotation corresponding to a specific state together.

Item (2) illustrates examples of inputting a snapshot of an annotation-input state.

Four specific examples from (a) to (d) are illustrated for each of the items, (1) and (2).

Section (1)(a) is an example of inputting annotations one by one in one-state unit in the example of inputting an instructed action string and an annotation corresponding to a specific state together.

The instructed action string is an arrow traveling route expressed as data in Section (1)(a), for example. In this example, data to which an annotation representing a sub reward setting position is set is generated on the route and is regarded as annotation (sub reward setting information) input information.

Section (1)(b) is an example of inputting a plurality of annotations that are successive states in the example of inputting an instructed action string and an annotation corresponding to a specific state together.

The instructed action string is an arrow traveling route expressed as data in Section (1)(b), for example. In this example, data pieces to each of which an annotation representing a sub reward setting position is set are generated successively on the route and are regarded as annotation (sub reward setting information) input information.

This input processing is performed by processing of keeping pressing the annotation input unit of the annotation (sub reward setting information) input apparatus 350, for example.

Section (1)(c) is an example of setting and inputting an identifier (ID) to each of annotations input by means of similar processing to that in the example in Section (1)(a).

For the identifier (ID), an identifier sequentially generated in the annotation (sub reward setting information) input apparatus 350 and time information can be used, for example.

Section (1)(d) is an example of setting and inputting an identifier (ID) to each of annotations input by means of similar processing to that in the example in Section (1)(b).

In a similar manner to that in the example in Section (1)(c), for the identifier (ID), an identifier sequentially generated in the annotation (sub reward setting information) input apparatus 350 and time information can be used, for example.

Section (2)(a) is an example of inputting annotations one by one in one-state unit in the example of inputting a snapshot of an annotation-input state.

This is an example in which a snapshot at a setting position of an annotation, such as a snapshot capturing a scene of a game, is generated and is regarded as annotation (sub reward setting information) input information, as illustrated in Section (2)(a).

Section (2)(b) is an example of inputting a plurality of annotations that are successive states in the example of inputting a snapshot of an annotation-input state.

This is an example in which snapshots at successive annotation setting positions, such as snapshots each capturing a scene of a game, are generated and are regarded as annotation (sub reward setting information) input information, as illustrated in Section (2)(b).

This input processing is performed by processing of keeping pressing the annotation input unit of the annotation (sub reward setting information) input apparatus 350, for example.

Section (2)(c) is an example of setting and inputting an identifier (ID) to each of annotations input by means of similar processing to that in the example in Section (2)(a).

For the identifier (ID), an identifier sequentially generated in the annotation (sub reward setting information) input apparatus 350 and time information can be used, for example.

Section (2)(d) is an example of setting and inputting an identifier (ID) to each of annotations input by means of similar processing to that in the example in Section (2)(b).

In a similar manner to that in the example in Section (2)(c), for the identifier (ID), an identifier sequentially generated in the annotation (sub reward setting information) input apparatus 350 and time information can be used, for example.

[3. About Sequence of Processing Executed by Information Processing Apparatus]

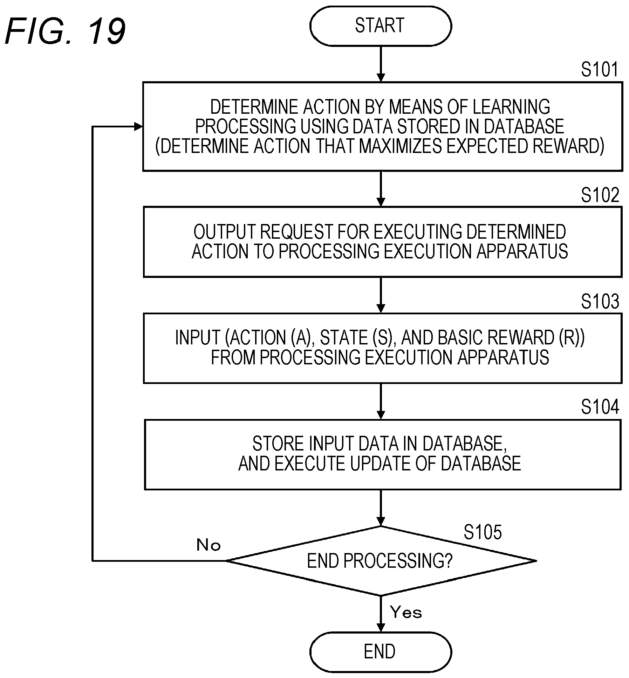

Next, examples of sequences of processing executed by the information processing apparatus will be described with reference to flowcharts illustrated in Fig. 19 and the subsequent figure.

Each of processing sequences described below is a processing sequence executed by the learning execution apparatus.

To facilitate understanding of differences between processing of the learning execution apparatus 310 with use of the annotation (sub reward setting information) input apparatus described with reference to Fig. 13 and the like and processing of the learning execution apparatus 110 having the conventional configuration illustrated in Fig. 5 without use of the annotation (sub reward setting information) input apparatus, processing of the learning processing apparatus 110 illustrated in Fig. 5 and a sequence of processing of the learning processing apparatus 310 illustrated in Fig. 13 will sequentially be described.

First, a sequence of processing of the learning execution apparatus 110 having the conventional configuration illustrated in Fig. 5 without use of the annotation (sub reward setting information) input apparatus will be described with reference to a flowchart illustrated in Fig. 19.

Note that processing along a flow illustrated in Fig. 19 can be executed by a data processing unit included in a CPU or the like having a program execution function in the learning execution apparatus 110 illustrated in Fig. 5 in accordance with a program stored in a storage unit.

Hereinbelow, processing in each step of the flow illustrated in Fig. 19 will sequentially be described.

(Step S101)

First, in step S101, the data processing unit in the learning execution apparatus 110 determines an action to be executed by the processing execution apparatus by means of learning processing using data stored in the database.

This processing is processing executed by the learning execution unit 112 and the action determination unit 113 in the learning execution apparatus 110 illustrated in Fig. 5.

As described above with reference to Fig. 5, the learning execution unit 112 in the learning execution apparatus 110 performs learning processing in accordance with the above-mentioned learning algorithm of the reinforcement learning.

Specifically, with use of, for example, time-series data of states (S), actions (A), and rewards (R) stored in the database 111, the learning execution unit 112 performs learning processing in accordance with (Equation 1) $\pi^*(a|s)$ described above specifying an action determination rule that maximizes an expected reward value specified in the reinforcement learning algorithm.

(Equation 1) is an action determination rule for determining an action (a) maximizing the expected reward in each of various states (s).

In the database 111, data of the state (S), the action (A), and the reward (R) at each time (t) input from the processing execution apparatus 120 as needed is stored.

In step S101, the data processing unit in the learning execution apparatus 110 determines an action to be executed by the processing execution apparatus by means of learning processing using data stored in the database.

(Step S102)

Subsequently, in step S102, the data processing unit in the learning execution apparatus 110 outputs a request for executing the action determined in step S101 to the processing execution apparatus.

This processing is processing executed by the determined action request unit 114 in the learning execution apparatus 110 illustrated in Fig. 5.

To cause the processing execution apparatus 120 to execute an action (A) determined by the action determination unit 113, the determined action request unit 114 makes a request for causing an action execution unit 121 in the processing execution apparatus 120 to execute the determined action.

(Step S103)

Subsequently, in step S103, the data processing unit in the learning execution apparatus 110 inputs respective pieces of information of (an action (A), a state (S), and a basic reward (R)) from the processing execution apparatus 120.

Note that these pieces of information can be input as needed and are input at an arbitrary time regardless of the step order in the flow.

(Step S104)

Subsequently, in step S104, the data processing unit in the learning execution apparatus 110 stores in the database 111 the respective pieces of information of (the action (A), the state (S), and the basic reward (R)) input from the processing execution apparatus 120 in step S103 and executes update processing of the database.

(Step S105)

Subsequently, in step S105, the data processing unit in the learning execution apparatus 110 determines whether or not the processing, that is, the processing in the processing execution apparatus 120, is completed, and in a case where the processing is not completed, the data processing unit executes the processing in step S101 and the subsequent steps again.

In the database 111 in the learning execution apparatus 110, a data set including the action (A), the state (S), and the reward (R) is stored as needed, and the database is updated.

With use of data (states (S), actions (A), and rewards (R)) including data newly stored in the database 111, the learning execution unit 112 in the learning execution apparatus 110 performs learning processing in accordance with (Equation 1) shown below, which is the action determination rule that maximizes an expected reward value specified in the reinforcement learning algorithm.

$$\pi^*(a|s) \quad \ldots \quad \text{(Equation 1)}$$

By repeating this processing, an action by which the reward is set to be maximized can be predicted, and processing in accordance with the predicated action can be executed.

The flow illustrated in Fig. 19 is a processing flow in the learning execution apparatus 110 having a configuration illustrated in Fig. 5, that is, a system not including the annotation (sub reward setting information) input apparatus described with reference to Fig. 13 and the like.

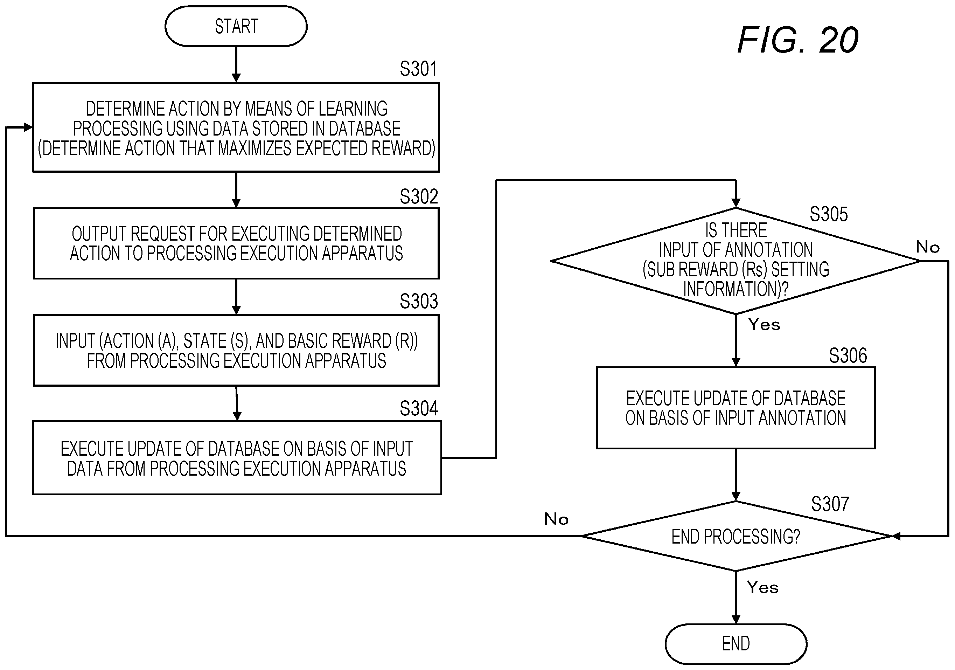

Next, a sequence of processing of the learning execution apparatus 310 with use of the annotation (sub reward setting information) input apparatus described with reference to Fig. 13 and the like will be described with reference to a flowchart illustrated in Fig. 20.

Note that processing along a flow illustrated in Fig. 20 can be executed by a data processing unit included in a CPU or the like having a program execution function in the learning execution apparatus 310 illustrated in Fig. 13 in accordance with a program stored in a storage unit.

Hereinbelow, processing in each step of the flow illustrated in Fig. 20 will sequentially be described.

(Step S301)

First, in step S301, the data processing unit in the learning execution apparatus 310 determines an action to be executed by the processing execution apparatus by means of learning processing using data stored in the database.

This processing is processing executed by the learning execution unit 312 and the action determination unit 313 in the learning execution apparatus 310 illustrated in Fig. 13.

As described above with reference to Fig. 13, the learning execution unit 312 in the learning execution apparatus 310 performs learning processing in accordance with the above-mentioned learning algorithm of the reinforcement learning.

Specifically, with use of, for example, time-series data of states (S), actions (A), and rewards (R) stored in the database 311, the learning execution unit 312 performs learning processing in accordance with (Equation 1) n*(a|s) described above specifying an action determination rule that maximizes an expected reward value specified in the reinforcement learning algorithm.

(Equation 1) is an action determination rule for determining an action (a) maximizing the expected reward in each of various states (s).

In the database 311, data of the state (S), the action (A), and the basic reward (R) at each time (t) input from the processing execution apparatus 320 as needed is stored.

Additionally, in the database 311 in the learning execution apparatus 310 illustrated in Fig. 13, a sub reward (Rs), which is input information from the annotation (sub reward (Rs) setting information) input apparatus 350 illustrated in Fig. 13, and respective pieces of information of a state (S) and an action (A) corresponding to the sub reward (Rs), are stored.

In other words, the database 311 in the learning execution apparatus 310 illustrated in Fig. 13 has stored therein a denser data set of the states (S), the actions (A), and the rewards (R) than the database 111 described above and illustrated in Fig. 5 does.

In step S301, the data processing unit in the learning execution apparatus 310 determines an action to be executed by the processing execution apparatus by means of learning processing using data stored in the database including the more information.

The learning execution unit 312 in the learning execution apparatus 310 illustrated in Fig. 13 can perform learning processing with use of more data (states (S), actions (A), and rewards (R)), improve learning efficiency, and clarify an optimal action to heighten the reward more quickly.

(Step S302)

Subsequently, in step S302, the data processing unit in the learning execution apparatus 310 outputs a request for executing the action determined in step S301 to the processing execution apparatus.

This processing is processing executed by the determined action request unit 314 in the learning execution apparatus 310 illustrated in Fig. 13.

To cause the processing execution apparatus 320 to execute an action (A) determined by the action determination unit 313, the determined action request unit 314 makes a request for causing an action execution unit 321 in the processing execution apparatus 320 to execute the determined action.

(Step S303)

Subsequently, in step S303, the data processing unit in the learning execution apparatus 310 inputs respective pieces of information of (an action (A), a state (S), and a basic reward (R)) from the processing execution apparatus 320.

Note that these pieces of information can be input as needed and are input at an arbitrary time regardless of the step order in the flow.

(Step S304)

Subsequently, in step S304, the data processing unit in the learning execution apparatus 310 stores in the database 311 the respective pieces of information of (the action (A), the state (S), and the basic reward (R)) input from the processing execution apparatus 320 in step S303 and executes update processing of the database.

(Step S305)

Subsequently, in step S305, the data processing unit in the learning execution apparatus 310 determines whether or not an annotation (sub reward (Rs) setting information) is input.

In other words, the data processing unit determines whether or not an annotation (sub reward (Rs) setting information) is input from the annotation (sub reward setting information) input apparatus 350.

In a case where it is determined that the annotation is input, the procedure moves to step S306.

In a case where it is determined that the annotation is not input, the procedure moves to step S307.

(Step S306)

In a case where it is determined in step S305 that the annotation (sub reward (Rs) setting information) is input from the annotation (sub reward setting information) input apparatus 350, in step S306, the data processing unit in the learning execution apparatus 310 acquires the annotation (sub reward (Rs) setting information) input from the annotation (sub reward setting information) input apparatus 350, and respective pieces of information of (the action (A) and the state (S) at the time, stores the information in the database 311, and executes update processing of the database 311.

As a result of this processing, data for learning corresponding to the annotation (sub reward setting information) based on the user's input is stored in the database 311.

(Step S307)

Subsequently, in step S307, the data processing unit in the learning execution apparatus 310 determines whether or not the processing, that is, the processing in the processing execution apparatus 320, is completed, and in a case where the processing is not completed, the data processing unit executes the processing in step S301 and the subsequent steps again.

As described above with reference to Fig. 13, the database 311 in the learning execution apparatus 310 has stored therein not only the state information (St) 302, the action information (At) 301b, and the basic reward information (Rt) 303 input from the processing execution apparatus 320 but also the annotation (sub reward (Rs) setting information) 351 input from the annotation (sub reward setting information) input apparatus 350, and the state information (St) 302 and the action information (At) 301b at the time.

In other words, the database 311 in the learning execution apparatus 310 illustrated in Fig. 13 has stored therein a denser data set of the states (S), the actions (A), and the rewards (R) than the database 111 described above and illustrated in Fig. 5 does, and the learning execution unit 312 can perform learning processing with use of a larger amount of data (states (S), actions (A), and rewards (R)).

As a result, learning efficiency is improved, and an optimal action for raising the reward can be made to be obvious more promptly.

[4. About Hardware Configuration Example of Information Processing Apparatus]

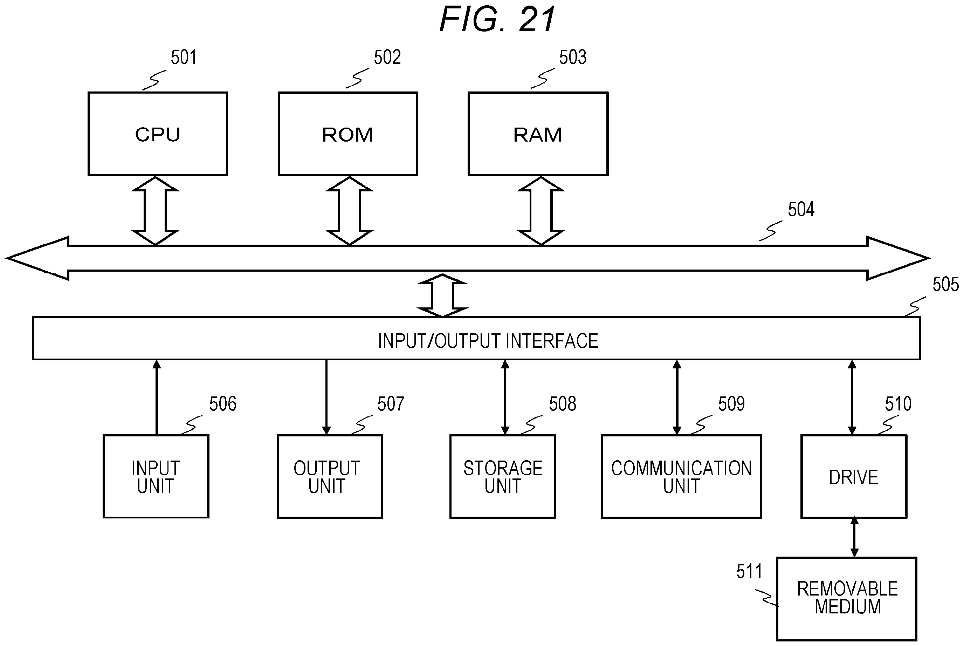

Next, a hardware configuration example of the information processing apparatus will be described with reference to Fig. 21.

Fig. 21 illustrates a hardware configuration example of the information processing apparatus that can be used as the information processing apparatus executing processing according to the present disclosure such as the respective apparatuses including the learning execution apparatus 310, the processing execution apparatus 320, and the annotation input apparatus 350 illustrated in Fig. 13, and an apparatus into which these respective apparatuses are combined.

A central processing unit (CPU) 501 functions as a control unit and a data processing unit executing various kinds of processing in accordance with a program stored in a read only memory (ROM) 502 or a storage unit 508. For example, the CPU executes processing in accordance with the sequence described in the above embodiment. A random access memory (RAM) 503 has stored therein a program executed by the CPU 501, data, and the like. The CPU 501, the ROM 502, and the RAM 503 are mutually connected by a bus 504.

The CPU 501 is connected via the bus 504 to an input/output interface 505, and to the input/output interface 505 are connected an input unit 506 including various switches, a keyboard, a mouse, a microphone, and the like and an output unit 507 executing data output to a display unit, a loudspeaker, and the like. The CPU 501 executes various kinds of processing in response to a command input from the input unit 506 and outputs a processing result to the output unit 507, for example.

The storage unit 508 connected to the input/output interface 505 includes a hard disk, for example, and stores a program executed by the CPU 501 and various kinds of data. A communication unit 509 functions as a transmission and reception unit for Wi-Fi communication, Bluetooth (registered trademark) (BT) communication, and other data communication via the Internet or a network such as a local area network and communicates with an external device.

A drive 510 connected to the input/output interface 505 drives a removable medium 511 such as a magnetic disk, an optical disk, a magneto-optical disk, and a semiconductor memory such as a memory card and executes recording or reading of data.

[5. Wrap-up of Configuration According to Present Disclosure]

The embodiment according to the present disclosure has been described above in detail with reference to the specific embodiment. However, it is to be understood that the embodiment can be modified or substituted by those skilled in the art without departing from the scope of the present disclosure. In other words, the present invention has been disclosed to provide illustrative examples and shall not be construed in a limited manner. To confirm the scope of the present disclosure, the patent claims shall be referred to.

Note that a technique disclosed in the present description can have the following configuration.

(1) An information processing apparatus including:

a database configured to store respective pieces of information of a state, an action, and a reward regarding processing executed by a processing execution unit;
a learning execution unit configured to execute learning processing in accordance with a reinforcement learning algorithm to which the respective pieces of information of the state, the action, and the reward stored in the database are applied; and
an annotation input unit configured to input annotation information including sub reward setting information and store the annotation information in the database,
in which the learning execution unit executes learning processing to which the respective pieces of information of the state, the action, and the reward input from the processing execution unit and the sub reward setting information input via the annotation input unit are applied.

(2) The information processing apparatus according to (1),
in which the learning execution unit derives an action determination rule for estimating an action to be executed to raise an expected reward by the learning processing.
(3) The information processing apparatus according to (1) or (2), further including:
an action determination unit configured to determine an action which the processing execution unit is caused to execute in accordance with the action determination rule.
(4) The information processing apparatus according to any one of (1) to (3), further including:

a data input unit configured to input the respective pieces of information of the state, the action, and the reward input from the processing execution unit,
in which the database stores input data of the data input unit and stores the sub reward setting information input via the annotation input unit.

(5) The information processing apparatus according to any one of (1) to (4),
in which the annotation input unit inputs the annotation information including the sub reward setting information input via an annotation input apparatus enabling input processing at an arbitrary time to be performed by a user and stores the annotation information in the database.

(6) The information processing apparatus according to any one of (1) to (5), further including:
a control unit configured to store the respective pieces of information of the state and the action of the processing execution unit at time of input of the annotation in the database in association with the sub reward setting information included in the annotation.

(7) The information processing apparatus according to (6),
in which the learning execution unit executes learning processing to which the respective pieces of information of the state, the action, and the reward input from the processing execution unit and respective pieces of information of a state, an action, and a sub reward stored in the database in association with the sub reward setting information input via the annotation input unit are applied.

(8) The information processing apparatus according to any one of (1) to (7),
in which the sub reward setting information input via the annotation input unit is information input by a user observing processing that the processing execution unit executes.

(9) The information processing apparatus according to any one of (1) to (8),
in which the sub reward setting information input via the annotation input unit is information input by a user controlling processing that the processing execution unit executes.

(10) The information processing apparatus according to any one of (1) to (9),
in which the sub reward setting information input via the annotation input unit is reward setting information which is input by a user observing processing that the processing execution unit executes and includes a positive reward value input by the user that has confirmed that the processing that the processing execution unit executes is correct.

(11) The information processing apparatus according to any one of (1) to (10),
in which the sub reward setting information input via the annotation input unit is reward setting information which is input by a user observing processing that the processing execution unit executes and includes a negative reward value input by the user that has confirmed that the processing that the processing execution unit executes is not correct.

(12) The information processing apparatus according to any one of (1) to (11),
in which the processing execution unit is an independent apparatus different from the information processing apparatus, and
the information processing apparatus performs data transmission and reception by communication processing with the processing execution unit and controls the processing execution unit.

(13) The information processing apparatus according to any one of (1) to (12),
in which the annotation input unit is configured to input the annotation information input by an independent annotation input apparatus different from the information processing apparatus.

(14) An information processing method executed in an information processing apparatus, the information processing apparatus including:

a database configured to store respective pieces of information of a state, an action, and a reward regarding processing executed by a processing execution unit;
a learning execution unit configured to execute learning processing in accordance with a reinforcement learning algorithm to which the respective pieces of information of the state, the action, and the reward stored in the database are applied; and
an annotation input unit configured to input annotation information including sub reward setting information and store the annotation information in the database,
in which the learning execution unit executes learning processing to which the respective pieces of information of the state, the action, and the reward input from the processing execution unit and the sub reward setting information input via the annotation input unit are applied.

(15) A program causing information processing to be executed in an information processing apparatus, the information processing apparatus including:

24

a database configured to store respective pieces of information of a state, an action, and a reward regarding processing executed by a processing execution unit;

a learning execution unit configured to execute learning processing in accordance with a reinforcement learning algorithm to which the respective pieces of information of the state, the action, and the reward stored in the database are applied; and

an annotation input unit configured to input annotation information including sub reward setting information and store the annotation information in the database,

in which the program causes the learning execution unit to execute learning processing to which the respective pieces of information of the state, the action, and the reward input from the processing execution unit and the sub reward setting information input via the annotation input unit are applied.

Furthermore, the sequence of processing described in the present description can be executed by hardware, software, or a combined configuration thereof. In a case where processing is executed by software, execution can be performed by installing a program recording a processing sequence in a memory in a computer incorporated in dedicated hardware and executing the program, or by installing the program in a general-purpose computer enabling various kinds of processing to be executed and executing the program. For example, the program can be recorded in a recording medium in advance. The program can be installed in the computer from the recording medium, or the program can be received via a network such as a local area network (LAN) and the Internet and installed in a recording medium such as a built-in hard disk.

Note that various kinds of processing described in the present description may not only be executed in chronological order in accordance with the description but may also be executed in parallel or individually depending on the throughput of an apparatus executing the processing or as needed. Furthermore, a system in the present description means a logically-collected configuration of a plurality of apparatuses and is not limited to one in which respective component apparatuses are in a single casing.

INDUSTRIAL APPLICABILITY

As described above, with the configuration of the embodiment of the present disclosure, an apparatus and a method enabling efficient reinforcement learning to be performed by input of an annotation are achieved.

Specifically, for example, the configuration includes a database configured to store respective pieces of information of a state, an action, and a reward of a processing execution unit, a learning execution unit configured to execute learning processing in accordance with a reinforcement learning algorithm to which the information stored in the database is applied, and an annotation input unit configured to input annotation information including sub reward setting information and store the annotation information in the database. The learning execution unit executes learning processing to which the respective pieces of information of the state, the action, and the reward input from the processing execution unit and the sub reward setting information are applied. The learning execution unit derives an action determination rule for estimating an action to be executed to raise an expected reward and determines an action which the processing execution unit is caused to execute in accordance with the action determination rule.

By the processing, an apparatus and a method enabling efficient reinforcement learning to be performed by input of an annotation are achieved.

REFERENCE SIGNS LIST

| | |
|---|---|
| 10 | Learning execution unit |
| 20 | Processing execution unit |
| 41 | Cleaning robot |
| 42 | PC |
| 110 | Learning execution apparatus |
| 111 | Database |
| 112 | Learning execution unit |
| 113 | Action determination unit |
| 114 | Determined action request unit |
| 115 | Action information input unit |
| 116 | State information input unit |
| 117 | Reward information input unit |
| 120 | Processing execution unit |

121    Action execution unit
122    State information acquisition unit
123    Reward information acquisition unit
130    PC
131    Cleaning robot
132    Remote control
133    Smartphone
200    PC
201    User
310    Learning execution apparatus
311    Database
312    Learning execution unit
313    Action determination unit
314    Determined action request unit
315    Action information input unit
316    State information input unit
317    Reward information input unit
318    Annotation input unit
320    Processing execution apparatus
321    Action execution unit
322    State information acquisition unit
323    Basic reward information acquisition unit
350    Annotation input apparatus
401    Smartphone
402    Remote control
403    Annotation input unit
405    Cleaning robot
501    CPU
502    ROM
503    RAM
504    Bus
505    Input/output interface
506    Input unit
507    Output unit
508    Storage unit
509    Communication unit
510    Drive
511    Removable medium

**Claims**

1.   An information processing apparatus comprising:

    a database configured to store respective pieces of information of a state, an action, and a reward of a processing execution unit;
    a learning execution unit configured to execute learning processing in accordance with a reinforcement learning algorithm to which the respective pieces of information of the state, the action, and the reward stored in the database are applied; and
    an annotation input unit configured to input annotation information including sub reward setting information and store the annotation information in the database,
    wherein the learning execution unit executes learning processing to which the respective pieces of information of the state, the action, and the reward input from the processing execution unit and the sub reward setting information input via the annotation input unit are applied.

2.   The information processing apparatus according to claim 1,
    wherein the learning execution unit derives an action determination rule for estimating an action to be executed to raise an expected reward by the learning processing.

**3.** The information processing apparatus according to claim 1, further comprising:
an action determination unit configured to determine an action which the processing execution unit is caused to execute in accordance with the action determination rule.

**4.** The information processing apparatus according to claim 1, further comprising:

a data input unit configured to input the respective pieces of information of the state, the action, and the reward input from the processing execution unit,
wherein the database stores input data of the data input unit and stores the sub reward setting information input via the annotation input unit.

**5.** The information processing apparatus according to claim 1,
wherein the annotation input unit inputs the annotation information including the sub reward setting information input via an annotation input apparatus enabling input processing at an arbitrary time to be performed by a user and stores the annotation information in the database.

**6.** The information processing apparatus according to claim 1, further comprising:
a control unit configured to store the respective pieces of information of the state and the action of the processing execution unit at time of input of the annotation in the database in association with the sub reward setting information included in the annotation.

**7.** The information processing apparatus according to claim 6,
wherein the learning execution unit executes learning processing to which the respective pieces of information of the state, the action, and the reward input from the processing execution unit and respective pieces of information of a state, an action, and a sub reward stored in the database in association with the sub reward setting information input via the annotation input unit are applied.

**8.** The information processing apparatus according to claim 1,
wherein the sub reward setting information input via the annotation input unit is information input by a user observing processing that the processing execution unit executes.

**9.** The information processing apparatus according to claim 1,
wherein the sub reward setting information input via the annotation input unit is information input by a user controlling processing that the processing execution unit executes.

**10.** The information processing apparatus according to claim 1,
wherein the sub reward setting information input via the annotation input unit is reward setting information which is input by a user observing processing that the processing execution unit executes and includes a positive reward value input by the user that has confirmed that the processing that the processing execution unit executes is correct.

**11.** The information processing apparatus according to claim 1,
wherein the sub reward setting information input via the annotation input unit is reward setting information which is input by a user observing processing that the processing execution unit executes and includes a negative reward value input by the user that has confirmed that the processing that the processing execution unit executes is not correct.

**12.** The information processing apparatus according to claim 1,
wherein the processing execution unit is an independent apparatus different from the information processing apparatus, and
the information processing apparatus performs data transmission and reception by communication processing with the processing execution unit and controls the processing execution unit.

**13.** The information processing apparatus according to claim 1,
wherein the annotation input unit is configured to input the annotation information input by an independent annotation input apparatus different from the information processing apparatus.

**14.** An information processing method executed in an information processing apparatus, the information processing apparatus comprising:

a database configured to store respective pieces of information of a state, an action, and a reward of a processing execution unit;

a learning execution unit configured to execute learning processing in accordance with a reinforcement learning algorithm to which the respective pieces of information of the state, the action, and the reward stored in the database are applied; and

an annotation input unit configured to input annotation information including sub reward setting information and store the annotation information in the database,

wherein the learning execution unit executes learning processing to which the respective pieces of information of the state, the action, and the reward input from the processing execution unit and the sub reward setting information input via the annotation input unit are applied.

15. A program causing information processing to be executed in an information processing apparatus, the information processing apparatus including:

a database configured to store respective pieces of information of a state, an action, and a reward of a processing execution unit;

a learning execution unit configured to execute learning processing in accordance with a reinforcement learning algorithm to which the respective pieces of information of the state, the action, and the reward stored in the database are applied; and

an annotation input unit configured to input annotation information including sub reward setting information and store the annotation information in the database,

wherein the program causes the learning execution unit to execute learning processing to which the respective pieces of information of the state, the action, and the reward input from the processing execution unit and the sub reward setting information input via the annotation input unit are applied.

FIG. 1

FIG. 2

41

EP 3 584 750 A1

## FIG. 3

EP 3 584 750 A1

FIG. 4

## FIG. 5

**110 LEARNING EXECUTION APPARATUS**

- **115** ACTION INFORMATION INPUT UNIT
- **101b** ACTION INFORMATION (At)
- **117** REWARD INFORMATION INPUT UNIT
- **103** REWARD INFORMATION (Rt)
- **116** STATE INFORMATION INPUT UNIT
- **102** STATE INFORMATION (St)
- **111** DATABASE (S1,A1,R1,··· Sn,An,Rn)
- **112** LEARNING EXECUTION UNIT
- **113** ACTION DETERMINATION UNIT
- **114** DETERMINED ACTION REQUEST UNIT
- **101a** ACTION INFORMATION (At)

**120 PROCESSING EXECUTION APPARATUS**

- **123** REWARD INFORMATION ACQUISITION UNIT
- **122** STATE INFORMATION ACQUISITION UNIT
- **121** ACTION EXECUTION UNIT

LEARNING OF ACTION DETERMINATION RULE $\pi^*(a \mid s)$ THAT MAXIMIZES EXPECTED REWARD

ACTION DETERMINATION IN ACCORDANCE WITH ACTION DETERMINATION RULE $S \rightarrow \pi^*(a \mid s) \rightarrow A$

EP 3 584 750 A1

FIG. 6

(A)

130

110 LEARNING EXECUTION APPARATUS (LEARNING PROGRAM EXECUTION UNIT)

120 PROCESSING EXECUTION APPARATUS (GAME PROGRAM EXECUTION UNIT)

(B)

132

F
L R
B
ON／OFF

133

110 LEARNING EXECUTION APPARATUS (LEARNING PROGRAM EXECUTION UNIT)

120 PROCESSING EXECUTION APPARATUS (CLEANING PROGRAM EXECUTION UNIT)

131

EP 3 584 750 A1

EP 3 584 750 A1

## FIG. 7

131

132

| F |
| L | R |
| B |
ON/OFF

COMMAND

133

(C)

110

LEARNING
EXECUTION APPARATUS
(LEARNING PROGRAM)
EXECUTION UNIT

120

PROCESSING
EXECUTION APPARATUS
(CLEANING PROGRAM)
EXECUTION UNIT

FIG. 8

**INFORMATION PROCESSING APPARATUS**
LEARNING EXECUTION APPARATUS
(REINFORCEMENT LEARNING EXECUTION UNIT)
& PROCESSING EXECUTION APPARATUS
(GAME PROGRAM EXECUTION UNIT)

130

GOAL
(REWARD OUTPUT POINT)
HIGH REWARD
(GAME SCORE=HIGH)

START

135 CHARACTER

136 EVIL CHARACTER

EP 3 584 750 A1

FIG. 9

INFORMATION PROCESSING APPARATUS
LEARNING EXECUTION APPARATUS
(REINFORCEMENT LEARNING EXECUTION UNIT)
& PROCESSING EXECUTION APPARATUS
(GAME PROGRAM EXECUTION UNIT)

130

GOAL
(REWARD OUTPUT POINT)
LOW REWARD
(GAME SCORE = LOW)

START

135 CHARACTER

136 EVIL CHARACTER

EP 3 584 750 A1

FIG. 10

INFORMATION PROCESSING APPARATUS
LEARNING EXECUTION APPARATUS
(REINFORCEMENT LEARNING EXECUTION UNIT)
& PROCESSING EXECUTION APPARATUS
(GAME PROGRAM EXECUTION UNIT)
& ANNOTATION INPUT APPARATUS

200
201

GOAL

An5  An6
An9
An4
An3  An7  An8

An2

135
CHARACTER

START

An1

211  ANNOTATION (SUB REWARD SETTING INFORMATION) (An1)

EP 3 584 750 A1

*FIG. 11*

INFORMATION PROCESSING APPARATUS
LEARNING EXECUTION APPARATUS
(REINFORCEMENT LEARNING EXECUTION UNIT)
& PROCESSING EXECUTION APPARATUS
(GAME PROGRAM EXECUTION UNIT)
& ANNOTATION INPUT APPARATUS

200
201

222
ANNOTATION
(An2)

(SCENE 1)
221
ANNOTATION
(An1)

(SCENE 2)
An2

CHARACTER

224
ANNOTATION
(An4)

An4

(SCENE 4)

An3

223
ANNOTATION
(An3)

(SCENE 3)

FIG. 12

EP 3 584 750 A1

# FIG. 13

**350** ANNOTATION (SUB REWARD SETTING INFORMATION) INPUT APPARATUS — 201

**310** LEARNING EXECUTION APPARATUS

**318** ANNOTATION (SUB REWARD (Rs) SETTING INFORMATION) INPUT UNIT

**351** ANNOTATION (SUB REWARD (Rs) SETTING INFORMATION)

**315** ACTION INFORMATION INPUT UNIT

**301b** ACTION INFORMATION (At)

**311** DATABASE (S1,A1,R1,··· Sn,An,Rn)

**317** BASIC REWARD INFORMATION INPUT UNIT

**303** BASIC REWARD INFORMATION (Rt)

**320** PROCESSING EXECUTION APPARATUS

**323** BASIC REWARD INFORMATION ACQUISITION UNIT

**316** STATE INFORMATION INPUT UNIT

**302** STATE INFORMATION (St)

**322** STATE INFORMATION ACQUISITION UNIT

**312** LEARNING EXECUTION UNIT

**313** ACTION DETERMINATION UNIT

**314** DETERMINED ACTION REQUEST UNIT

**301a** ACTION INFORMATION (At)

**321** ACTION EXECUTION UNIT

LEARNING OF ACTION DETERMINATION RULE $\pi^*(a \mid s)$ THAT MAXIMIZES EXPECTED REWARD

ACTION DETERMINATION IN ACCORDANCE WITH ACTION DETERMINATION RULE $S \rightarrow \pi^*(a \mid s) \rightarrow A$

# FIG. 14

401

402

403a

403b

F

L R

B

GOOD  BAD

ON／OFF

405

310
LEARNING
EXECUTION APPARATUS
(LEARNING PROGRAM
EXECUTION UNIT)

320
PROCESSING
EXECUTION APPARATUS
(PROCESSING (CLEANING)
PROGRAM EXECUTION UNIT)

350
ANNOTATION
(SUB REWARD SETTING INFORMATION)
INPUT APPARATUS

FIG. 15

EP 3 584 750 A1

FIG. 16

An1

405

402

INFORMATION PROCESSING APPARATUS
LEARNING EXECUTION APPARATUS
(LEARNING PROGRAM EXECUTION UNIT)
& PROCESSING EXECUTION APPARATUS
(CLEANING PROGRAM EXECUTION UNIT)

F

L ◄ ● ► R

B

INFORMATION
PROCESSING APPARATUS
CONTROLLER & ANNOTATION
INPUT APPARATUS

403

ANNOTATION INPUT UNIT

GOOD   BAD

ON/OFF

201

EP 3 584 750 A1

# FIG. 17

401

350
ANNOTATION
(SUB REWARD SETTING INFORMATION)
INPUT APPARATUS

402

F
L R
B
ON／OFF

405

310
LEARNING
EXECUTION APPARATUS
(LEARNING PROGRAM
EXECUTION UNIT)

320
PROCESSING
EXECUTION APPARATUS
(PROCESSING (CLEANING)
PROGRAM EXECUTION UNIT)

EP 3 584 750 A1

## FIG. 18

| | | (a) | (b) | (c) | (d) |
|---|---|---|---|---|---|
| | | 1 STATE | SUCCESSIVE STATES ( KEEP PRESSING ANNOTATION INPUT UNIT ) | 1 STATE+ID | SUCCESSIVE STATES+ID |
| (1) | INSTRUCTED ACTION STRING + ANNOTATION TO SPECIFIC STATE | | | | |
| (2) | SNAPSHOT OF ANNOTATION-INPUT STATE | | | | |

EP 3 584 750 A1

EP 3 584 750 A1

*FIG. 19*

```
                    ┌─────────────┐
                    │    START    │
                    └─────────────┘
                           │
                           ▼                              S101
    ┌──────────────────────────────────────────────────────┐
    │      DETERMINE ACTION BY MEANS OF LEARNING             │
    │    PROCESSING USING DATA STORED IN DATABASE            │
    │  (DETERMINE ACTION THAT MAXIMIZES EXPECTED REWARD)     │
    └──────────────────────────────────────────────────────┘
                           │
                           ▼                              S102
    ┌──────────────────────────────────────────────────────┐
    │      OUTPUT REQUEST FOR EXECUTING DETERMINED           │
    │    ACTION TO PROCESSING EXECUTION APPARATUS            │
    └──────────────────────────────────────────────────────┘
                           │
                           ▼                              S103
    ┌──────────────────────────────────────────────────────┐
    │   INPUT (ACTION (A), STATE (S), AND BASIC REWARD (R))  │
    │       FROM PROCESSING EXECUTION APPARATUS              │
    └──────────────────────────────────────────────────────┘
                           │
                           ▼                              S104
    ┌──────────────────────────────────────────────────────┐
    │         STORE INPUT DATA IN DATABASE,                  │
    │       AND EXECUTE UPDATE OF DATABASE                   │
    └──────────────────────────────────────────────────────┘
                           │
                           ▼                              S105
              No      ◇ END PROCESSING? ◇
           ◄──────────
                           │ Yes
                           ▼
                    ┌─────────────┐
                    │     END     │
                    └─────────────┘
```

FIG. 20

START

S301
DETERMINE ACTION BY MEANS OF LEARNING PROCESSING USING DATA STORED IN DATABASE (DETERMINE ACTION THAT MAXIMIZES EXPECTED REWARD)

S302
OUTPUT REQUEST FOR EXECUTING DETERMINED ACTION TO PROCESSING EXECUTION APPARATUS

S303
INPUT (ACTION (A), STATE (S), AND BASIC REWARD (R)) FROM PROCESSING EXECUTION APPARATUS

S304
EXECUTE UPDATE OF DATABASE ON BASIS OF INPUT DATA FROM PROCESSING EXECUTION APPARATUS

S305
IS THERE INPUT OF ANNOTATION (SUB REWARD (Rs) SETTING INFORMATION)?

No

Yes

S306
EXECUTE UPDATE OF DATABASE ON BASIS OF INPUT ANNOTATION

S307
END PROCESSING?

No

Yes

END

EP 3 584 750 A1

## FIG. 21

CPU 501　ROM 502　RAM 503

504

505

INPUT/OUTPUT INTERFACE

INPUT UNIT 506　OUTPUT UNIT 507　STORAGE UNIT 508　COMMUNICATION UNIT 509　DRIVE 510

REMOVABLE MEDIUM 511

EP 3 584 750 A1

## INTERNATIONAL SEARCH REPORT

| International application No. |
| --- |
| PCT/JP2017/040356 |

| A. CLASSIFICATION OF SUBJECT MATTER |
| --- |
| Int.Cl. G06N99/00(2010.01)i |

According to International Patent Classification (IPC) or to both national classification and IPC

| B. FIELDS SEARCHED |
| --- |
| Minimum documentation searched (classification system followed by classification symbols) |
| Int.Cl. G06N3/00-99/00, A63F13/00-13/98, B25J13/00 |

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| Y | JP 2013-81683 A (SONY CORPORATION) 09 May 2013, claim 1, paragraphs [0126]-[0158] & US 2013/0097107 A1, claim 1, paragraphs [0236]-[0268] & CN 103198358 A | 1-15 |
| Y | 前田 陽一郎 ほか, Shaping 強化学習を用いた自律エージェントの行動獲得支援手法, 知能と情報 (日本知能情報ファジィ学会誌), 15 October 2009, vol. 21, no. 5, pp. 722-733, ISSN 1347-7986, particularly, chapter 3 (MAEDA, Yoichiro et al., Behavior acquisition supporting method used shaping reinforcement learning for autonomous agent, Journal of Japan Society for Fuzzy Theory and Intelligent Informatics) | 1-15 |

☒ Further documents are listed in the continuation of Box C.   ☐ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 31.01.2018 | 13.02.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

International application No.

PCT/JP2017/040356

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2005-238422 A (SONY CORPORATION) 08 September 2005, paragraphs [0046]-[0050] (Family: none) | 11 |

Form PCT/ISA/210 (continuation of second sheet) (January 2015)

**EP 3 584 750 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TEJAS D. KULKARNI.** Hierarchical Deep Reinforcement Learning: Integrating Temporal Abstraction and Intrinsic Motivation. *30th Conference on Neural Information Processing System (NIPS 2016),* 2016, https://papers.nips.cc/paper/6233-hierarchical-deep-reinforcement-learning-integrating-temporal-abstraction-and-intrinsic-motivation